(19) Europäisches Patentamt
European Patent Office
Office européen des brevets

(11) **EP 4 474 998 B1**

(12) **EUROPEAN PATENT SPECIFICATION**

(45) Date of publication and mention
of the grant of the patent:
**28.01.2026 Bulletin 2026/05**

(21) Application number: **23875937.7**

(22) Date of filing: **28.11.2023**

(51) International Patent Classification (IPC):
**G06F 12/02** *(2006.01)*

(52) Cooperative Patent Classification (CPC):
**G06F 12/0253;** G06F 2212/1044; Y02D 10/00

(86) International application number:
**PCT/CN2023/134800**

(87) International publication number:
**WO 2024/221903 (31.10.2024 Gazette 2024/44)**

(54) **MEMORY RECOVERY METHOD AND ELECTRONIC DEVICE**

SPEICHERWIEDERHERSTELLUNGSVERFAHREN UND ELEKTRONISCHE VORRICHTUNG

PROCÉDÉ DE RÉCUPÉRATION DE MÉMOIRE ET DISPOSITIF ÉLECTRONIQUE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **23.04.2023 CN 202310442272**

(43) Date of publication of application:
**11.12.2024 Bulletin 2024/50**

(73) Proprietor: **Honor Device Co., Ltd.
Shenzhen, Guangdong 518040 (CN)**

(72) Inventors:
• **YANG, Xuzhe
Shenzhen, Guangdong 518040 (CN)**
• **YI, Pengxiang
Shenzhen, Guangdong 518040 (CN)**
• **LI, Zhiwei
Shenzhen, Guangdong 518040 (CN)**

(74) Representative: **Isarpatent
Patent- und Rechtsanwälte
Barth Hassa Peckmann & Partner mbB
Friedrichstraße 31
80801 München (DE)**

(56) References cited:
EP-A1- 3 979 082          WO-A1-2022/089452
CN-A- 108 205 498          CN-A- 110 727 607
CN-A- 111 831 440          CN-A- 113 778 662
CN-A- 113 778 662          CN-A- 116 185 890
US-A1- 2022 121 495          US-A1- 2024 054 079

**Description**

**TECHNICAL FIELD**

This application relates to the field of terminal devices, and in particular, to a memory reclaim method, an electronic device, and a computer-readable storage medium.

**BACKGROUND**

Linux is an operating system. Memory reclaim in memory control of Linux is to reclaim a portion that is in an applied memory (including a file page, an anonymous page, and an SLAB cache) and that can be released, and return the portion to a buddy system (buddy system).

memcg (Memory Cgroup, memory control group) is a memory grouping management technology used in a Linux open source community. At present, some manufacturers set one memcg for memory of each application (APP), to facilitate management of the memory of the application.

In conventional technologies, a Linux system traverses each memcg during memory reclaim, to reclaim a reclaimable memory. However, some memcgs consume a long time for memory reclaim, but reclaim a small reclaimed memory amount. As a result, the system has low overall memory reclaim efficiency.

WO 2022/089452 A1 discloses a memory management method, a device, an electronic device, and a computer-readable storage medium. The disclosed solution can be implemented by creating an application-level memory control group for the first application when the first application is started, adding the anonymous pages of the first application to the least recently used list of the application-level memory control group, and adding the file pages of the first application to the global least recently used list.

CN 113 778 662 A discloses a memory recycling method and an apparatus which maintain memory pages of multiple applications with the same priority in the same memory page linked list. During memory reclamation, the memory pages of each application stored in the memory page linked list are reclaimed in a balanced manner according to a cold-to-hot order, rather than reclaiming memory for each application individually (i.e., first reclaiming all reclaimable memory from one application before moving on to the next application).

US 2022/121495 A1 discloses a memory reclamation method and apparatus, an electronic device, and a storage medium. The method comprises: in a memory reclamation scenario, obtaining the memory pressure, the memory pressure representing the ratio of an unreclaimed memory to a scanned memory within a historical time window; obtaining a memory reclamation ratio corresponding to the memory pressure, wherein the memory reclamation ratio represents the ratio among a plurality of memory reclamation objects; the higher the memory pressure, the lower the ratio of memory reclamation objects which need to consume CPU resources during reclamation in the corresponding memory reclamation ratio; and performing memory reclamation on the basis of the memory reclamation ratio.

**SUMMARY**

The invention is defined in the appended claims. The dependent claims set out particular embodiments.

To resolve the foregoing technical problem, this application provides a memory reclaim method, an electronic device, and a computer-readable storage medium, as defined in the appended set of claims. A memory reclaim level of each application is

configured based on memory reclaim efficiency of a memory control group corresponding to each application. A memory of an application ranking first is reclaimed first. In this way, reclaim is first performed for a memory control group whose memory is easy to reclaim, to avoid excessive memory reclaim, to improve overall memory reclaim efficiency.

According to a first aspect, this application provides a memory reclaim method. The method is applied to an electronic device, and includes: obtaining, based on historical data of memory reclaim, memory reclaim efficiency of a memory control group corresponding to each application on the current electronic device, if a trigger condition for a memory reclaim procedure is satisfied; setting, based on the obtained memory reclaim efficiency, a reclaim level of the memory control group corresponding to each application; and determining, based on a reclaim priority and the reclaim level of each memory control group, a target memory control group that needs to be traversed, scanning the target memory control group, and reclaiming a scanned reclaimable memory. A memory reclaim level of each application is configured based on memory reclaim efficiency of a memory control group corresponding to each application. A memory of an application ranking first is reclaimed first. In this way, reclaim is first performed for a memory control group whose memory is easy to reclaim, to effectively avoid excessive memory reclaim, to improve overall memory reclaim efficiency.

According to the first aspect, the setting, based on the obtained memory reclaim efficiency, a reclaim level of the memory control group corresponding to each application includes: for each memory control group, determining a first reclaim efficiency range to which the memory reclaim efficiency of the memory control group belongs; searching a configured correspondence between a reclaim efficiency range and a reclaim level for a first reclaim level corresponding to the first reclaim efficiency range; and Setting the reclaim level of the memory control group to the first reclaim level. In this way, the reclaim level for the memory control group is set based on the memory reclaim efficiency, so that a basis may be provided for selecting a memory control group to be scanned based on the reclaim level. Therefore, the memory control group with high memory reclaim efficiency first obtains a reclaim scanning opportunity.

According to the first aspect, the setting, based on the obtained memory reclaim efficiency, a reclaim level of the memory control group corresponding to each application includes: obtaining an application whitelist, where at least one first application is recorded in the application whitelist; and setting, based on the obtained memory reclaim efficiency and the application whitelist, the reclaim level of the memory control group corresponding to each application. In this way, the application whitelist is determined as one of factors for determining the reclaim level of the memory control group, so that a special reclaim level may be set for a memory control group of a specified application as required. Therefore, probability that memory of the memory control group corresponding to the application in the application whitelist is reclaimed is reduced. This reduces impact of memory reclaim on the application in the whitelist, and improves user experience.

According to the first aspect, the obtaining an application whitelist includes: reading a first whitelist from an existing configuration file; setting, based on the obtained memory reclaim efficiency and the application whitelist, the reclaim level of the memory control group corresponding to each application; for each memory control group, determining a first reclaim efficiency range to which the memory reclaim efficiency of the memory control group belongs; searching a configured correspondence between a reclaim efficiency range and a reclaim level for a first reclaim level corresponding to the first reclaim efficiency range; and setting the reclaim level of the memory control group to the first reclaim level; and adjusting, to a second reclaim level, a reclaim level of a memory control group corresponding to a first application in the first whitelist. In this way, a commonly used application is added to the configuration file, so that the commonly used application becomes an application in the whitelist, to set a special reclaim level for a memory control group of the corresponding commonly used application. Therefore, probability that memory of the memory control group of the commonly used application is reclaimed is reduced. This reduces impact of memory reclaim on the commonly used application, and improves user experience.

According to the first aspect, the obtaining an application whitelist includes: recognizing a foreground application; generating a second whitelist based on the recognized foreground application, where an application in the second whitelist is the foreground application; setting, based on the obtained memory reclaim efficiency and the application whitelist, the reclaim level of the memory control group corresponding to each application; for each memory control group, determining a first reclaim efficiency range to which the memory reclaim efficiency of the memory control group belongs; searching a configured correspondence between a reclaim efficiency range and a reclaim level for a first reclaim level corresponding to the first reclaim efficiency range; and setting the reclaim level of the memory control group to the first reclaim level; and adjusting, to a second reclaim level, a reclaim level of a memory control group corresponding to the foreground application. In this way, the foreground application may be added to the application whitelist, so that a special reclaim level may be set for a memory control group of the foreground application. Therefore, probability that memory of a memory control group corresponding to the foreground application is reclaimed is reduced. This reduces impact of memory reclaim on the foreground application, and improves user experience.

According to the first aspect, the obtaining an application whitelist includes: reading a first whitelist from an existing configuration file; recognizing a foreground application; adding the foreground application to the first whitelist, to obtain a third whitelist; setting, based on the obtained memory reclaim efficiency and the application whitelist, the reclaim level of the memory control group corresponding to each application; for each memory control group, determining a first reclaim efficiency range to which the memory reclaim efficiency of the memory control group belongs; searching a configured correspondence between a reclaim efficiency range and a reclaim level for a first reclaim level corresponding to the first reclaim efficiency range; setting the reclaim level of the memory control group to the first reclaim level; and adjusting, to a second reclaim level, a reclaim level of a memory control group corresponding to each application in the third whitelist. In this way, the commonly used application and the foreground application may be added to the application whitelist, so that the special reclaim levels may be set for the memory control groups of the commonly used application and the foreground application. Therefore, probability that memory of the memory control groups corresponding to the commonly used application and the foreground application is reclaimed is reduced. This reduces impact of memory reclaim on the commonly used application and the foreground application, and improves user experience.

According to the first aspect, the second reclaim level is a lowest reclaim level. In this way, the probability that memory of the memory control group corresponding to the commonly used application and the foreground application is reclaimed may be reduced to a maximum extent.

According to the first aspect, in the correspondence between the reclaim efficiency range and the reclaim level, if a value of reclaim efficiency corresponding to the reclaim efficiency range is higher, a reclaim level corresponding to the reclaim efficiency range is higher. In this way, a memory control group with high reclaim efficiency has the priority to obtain the memory reclaim opportunity, avoid excessive reclaim of memory, reduce time consumed on memory reclaim, and improve overall memory reclaim efficiency of the system.

According to the first aspect, the obtaining, based on historical data of memory reclaim, memory reclaim efficiency of a memory control group corresponding to each application on the current electronic device includes: for each application, obtaining a scanned memory amount and a reclaimed memory amount of the memory control group corresponding to the application in a previous reclaim; and determining, based on the scanned memory amount and the reclaimed memory amount, the memory reclaim efficiency of the memory control group corresponding to the application. In this way, the memory reclaim efficiency of the memory control group corresponding to each application may be obtained, to provide a basis for sorting opportunities of reclaiming memory of memory control groups in the memory reclaim procedure.

According to the first aspect, the determining, based on the scanned memory amount and the reclaimed memory amount, the memory reclaim efficiency of the memory control group corresponding to the application includes: determining first memory reclaim efficiency of a file page of the memory control group based on a first scanned memory amount and a first reclaimed memory amount of the file page of the memory control group corresponding to the application in the previous reclaim; determining second memory reclaim efficiency of an anonymous page of the memory control group based on a second scanned memory amount and a second reclaimed memory amount of the anonymous page of the memory control group corresponding to the application in the previous reclaim; and determining, based on the first memory reclaim efficiency and the second memory reclaim efficiency, the memory reclaim efficiency of the memory control group corresponding to the application. In this way, memory reclaim efficiency of memory control groups can be accurately obtained.

According to the first aspect, the memory reclaim efficiency of the memory control group corresponding to the application is equal to a product of the first memory reclaim efficiency and a first coefficient, or equal to a sum of the first memory reclaim efficiency and the second memory reclaim efficiency. In this way, memory reclaim efficiency of each memory control group can be accurately obtained based on a weighted sum of memory reclaim efficiency of the file page and the anonymous page of the memory control group.

According to the first aspect, the first coefficient is determined based on a ratio of a reclaim rate of the file page to a reclaim rate of the anonymous page. In this way, the first coefficient is determined based on the ratio of a reclaim rate of the file page to a reclaim rate of the anonymous page, so that a proportion of the memory reclaim efficiency of the file page and the anonymous page of the memory control group in the memory reclaim efficiency of the memory control group can be appropriately obtained, to accurately obtain the memory reclaim efficiency of the memory control group.

According to the first aspect, the determining, based on a reclaim priority and the reclaim level of each memory control group, a target memory control group that needs to be traversed, scanning the target memory control group, and reclaiming a scanned reclaimable includes: determining, based on a correspondence between a reclaim priority and a reclaim level, a first target reclaim level corresponding to an initial reclaim priority; determining, as a first target memory control group, a memory control group whose corresponding reclaim level is equal to or higher than the first target reclaim level; and scanning the first target memory control group, and reclaiming a scanned first reclaimable memory. In this way, memory reclaim is performed on only a memory control group whose reclaim level is equal to or higher than the first target reclaim level. Therefore, while a requirement for the reclaimed memory amount is met, excessive memory reclaim can be effectively avoided, and a quality of memory reclaim times can be reduced. This improves the memory reclaim efficiency of the system.

According to the first aspect, before the determining, based on a correspondence between a reclaim priority and a reclaim level, a first target reclaim level corresponding to an initial reclaim priority, the method further includes: determining the initial reclaim priority based on a preset reclaim amount for a current reclaim, where the larger preset reclaim amount indicates the lower determined initial reclaim priority. In this way, the initial reclaim priority is determined based on the preset reclaim amount, so that a scope of memory reclaim can be appropriately determined, and the quantity of memory reclaim times can be reduced. This improves the memory reclaim efficiency of the system.

According to the first aspect, the method further includes: if the first reclaimable memory is less than a preset reclaim amount, determining a first target reclaim priority based on the initial reclaim priority and an adjustment step, where the first target reclaim priority is lower than the initial reclaim priority; determining, based on the correspondence between the reclaim priority and the reclaim level, a second target reclaim level corresponding to the first target reclaim priority, where the second target reclaim level is equal to or lower than the first target reclaim level; determining, as a second target memory control group, a memory control group whose corresponding reclaim level is equal to or higher than the second target reclaim level; and scanning the second target memory control group, and reclaiming a scanned second reclaimable memory. In this way, when a primarily reclaimed memory amount does not meet a required amount of memory reclaimed, an appropriate memory range may be determined first, and then memory reclaim is performed. This effectively avoids excessive memory reclaim, and improves the memory reclaim efficiency of the system.

According to the first aspect, the method further includes: if a sum of the first reclaimable memory and the second reclaimable memory is less than the preset reclaim amount, determining a second target reclaim priority based on the first target reclaim priority and the adjustment step, where the second target reclaim priority is lower than the first target reclaim priority; determining, based on the correspondence between the reclaim priority and the reclaim level, a third target reclaim level corresponding to the second target reclaim priority, where the third target reclaim level is equal to or lower than the second target reclaim level; determining, as a third target memory control group, the memory control group whose corresponding reclaim level is equal to or higher than the third target reclaim level; and scanning the third target memory control group, and reclaiming a scanned third reclaimable memory. In this way, when a total amount of memory reclaimed secondarily does not meet the required amount of memory reclaimed, an appropriate memory range may be determined first, and then memory reclaim is performed. This effectively avoids excessive memory reclaim, and improves the memory reclaim efficiency of the system.

According to the first aspect, the adjustment step is a fixed value; or the adjustment step is determined as follows: determining the adjustment step based on a difference between a total reclaimed memory amount in a current round and the preset reclaim amount, where the larger difference indicates a larger value of the determined adjustment step; or determining the adjustment step based on a ratio of a difference between a total reclaimed memory amount in a current round and the preset reclaim amount to the preset reclaim amount, where the larger ratio indicates a larger value of the determined adjustment step. In this way, a different manner of determining the adjustment step may be used as required, to meet requirements for different scenarios.

According to the first aspect, before the obtaining, based on historical data of memory reclaim, memory reclaim efficiency of a memory control group corresponding to each application on the current electronic device, if a trigger condition for a memory reclaim procedure is satisfied, the method further includes: when it is detected that a free memory of the current electronic device is lower than a first value, triggering the memory reclaim procedure. In this way, the memory reclaim procedure can be triggered in a timely manner.

According to the first aspect, an application with a higher memory reclaim efficiency indicates a higher reclaim level of a corresponding memory control group, and a higher reclaim level indicates a larger reclaim probability. In this way, probability of memory reclaim of different memory control groups is controlled by setting the reclaim level. Therefore, a case in which probability of all memory control groups is the same is changed, probability of reclaiming the memory of the memory control group whose memory is easy to be reclaimed is large, and probability of reclaiming memory of a memory control group whose memory is difficult to be reclaimed is small. This improves the memory reclaim efficiency of the system.

According to the first aspect, a higher reclaim priority indicates the higher reclaim level of the target memory control group that needs to be traversed, and a smaller quantity of target memory control groups when a quantity of memory control groups and corresponding reclaim levels are unchanged. In this way, a memory reclaim range may be controlled based on the reclaim level. This avoids excessive reclaim of memory, and improves the overall memory reclaim efficiency of the system.

According to the first aspect, the electronic device may be a mobile phone, a tablet computer, and a television. Certainly, the electronic device may be another electronic device whose memory needs to be reclaimed.

According to a second aspect, this application provides an electronic device. The electronic device includes: a memory and a processor, where the memory is coupled to the processor, where the memory stores program instructions, and when the program instructions are executed by the processor, the electronic device is enabled to perform the memory reclaim method according to the first aspect and any of the first aspect.

According to a third aspect, this application provides a computer-readable storage medium, including a computer program, where when the computer program is run on an electronic device, the electronic device is enabled to perform the memory reclaim method according to the first aspect and any of the first aspect.

## BRIEF DESCRIPTION OF THE DRAWINGS

FIG. 1 is a schematic diagram of an example of a structure of an electronic device 100;

FIG. 2 is a block diagram of an example of a software structure of an electronic device 100 according to an embodiment of this application;

FIG. 3A and FIG. 3B are schematic flowcharts of an example of a memory reclaim method according to an embodiment of this application;

FIG. 4 is a schematic diagram of an example of memory control of a memory control group memcg of an application on a mobile phone;

FIG. 5 is a schematic diagram of an example of management of a linked list in each memory control group memcg;

FIG. 6A and FIG. 6B are schematic flowcharts of another example of a memory reclaim method according to an embodiment of this application;

FIG. 7 is a schematic diagram of an example of a relationship between updating of an application whitelist and setting of a reclaim level of a memory control group according to an embodiment of this application; and

FIG. 8 is a schematic flowchart of another example of a memory reclaim method according to an embodiment.

## EP 4 474 998 B1

**DETAILED DESCRIPTION OF THE EMBODIMENTS**

The following clearly and comprehensively describes the technical solutions in the embodiments of this application with reference to the accompanying drawings in the embodiments of this application.

The term "and/or" in this specification is only an association relationship for describing associated objects, and represents that three relationships may exist, for example, A and/or B may represent the following three cases: Only A exists, both A and B exist, and only B exists.

In this specification and claims in the embodiments of this application, the terms "first", "second", and the like are intended to distinguish between different objects but do not indicate a particular sequence of the objects. For example, a first target object and a second target object are intended to distinguish between different target objects, but do not indicate a particular sequence of the target objects.

In the embodiments of this application, the term "exemplary" or "for example" is used to represent giving an example, an illustration, or a description. Any embodiment or design scheme described by using "exemplary" or "for example" in the embodiments of this application should not be explained as being more preferred or having more advantages than another embodiment or design scheme. Exactly, use of the words such as "example" or "for example" is intended to present a related concept in a specific manner.

In the description of the embodiments of this application, unless otherwise stated, "a plurality of" means two or more. For example, "a plurality of processing units" means two or more processing units, and "a plurality of systems" means two or more systems.

In conventional technologies, Linux traverses each memcg during memory reclaim, to reclaim a reclaimable memory. This manner has the following problems:

Firstly, memory reclaim rates of different memcgs are different. For example, a memory of 100 MB (megabyte) may be reclaimed for some memcgs in 1 ms (millisecond), while a memory of only 5 MB may be reclaimed for some memcgs in 1 ms. As a result, a specific memcg whose memory is difficult to be reclaimed consumes an excessively long time, and a system has low overall memory reclaim efficiency.

Secondly, in the conventional technologies, all memcgs need to be traversed during memory reclaim, and there is no priority reclaim strategy for memory reclaim of the memcgs. However, during normal use of a user, use of APPs is different. For example, during one day, probability of using an APP1 is about 70%, while probability of using an APP2 may be only 5%. If a same reclaim strategy is used for the APP1 and the APP2, use experience of the APP1 is poor.

Thirdly, in the conventional technologies, there is no difference between memory reclaim of a foreground APP and that of a background APP. Memory reclaim of the foreground APP causes poor use experience of the foreground APP.

An embodiment provides a memory reclaim method and an electronic device. A sequence of reclaiming memory of applications is configured based on memory reclaim efficiency of a memory control group corresponding to each application, to first reclaim memory of a top application. This improves the memory reclaim efficiency.

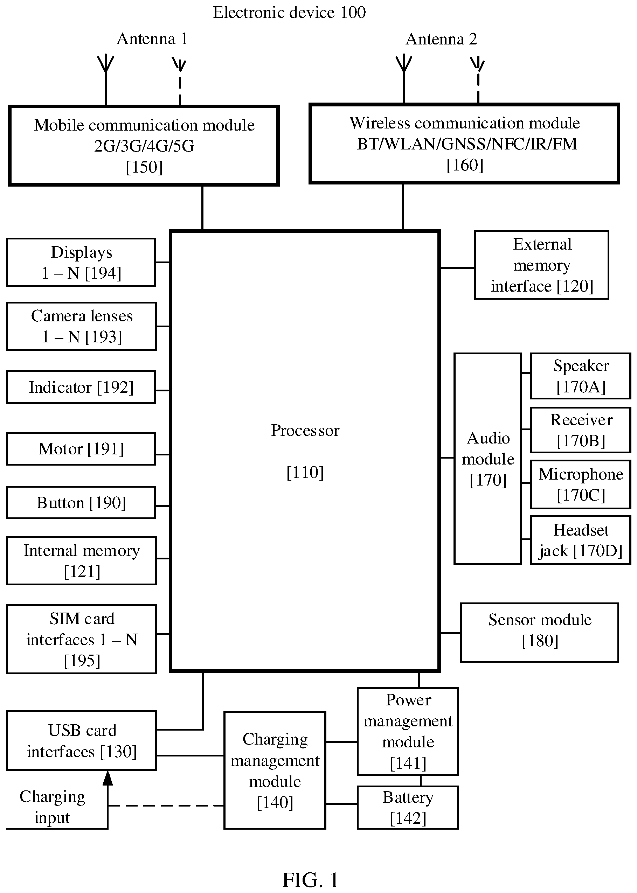

In this embodiment, the method may be applied to electronic devices such as a mobile phone, a tablet computer, a television, and the like. A structure of the electronic device may be shown in FIG. 1.

FIG. 1 is a schematic diagram of an example of a structure of an electronic device 100. It should be understood that the electronic device 100 shown in FIG. 1 is only an example of the electronic device, and the electronic device 100 may have more or fewer components than those shown in the figure, may combine two or a plurality of components, or may have a different component configuration. Various parts shown in FIG. 1 may be implemented in hardware including one or more signal processing and/or application-specific integrated circuits, in software, or in a combination of hardware and software.

As shown in FIG. 1, the electronic device 100 may include: a processor 110, an internal memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a telephone receiver 170B, a microphone 170C, a headset jack 170D, a sensor module 180, an indicator 192, a camera lens 193, and the like.

The processor 110 may include one or more processing units. For example, the processor 110 may include an application processor (application processor, AP), a modem processor, a graphics processing unit (graphics processing unit, GPU), an image signal processor (image signal processor, ISP), a controller, a memory, a video encoder and decoder, a digital signal processor (digital signal processor, DSP), a baseband processor, a neural-network processing unit (neural-network processing unit, NPU), and/or the like. Different processing units may be independent devices, or may be integrated into one or more processors.

The controller may be a nerve center and a command center of the electronic device 100. The controller may generate an operation control signal based on an instruction operation code and a timing signal, and implement control on instruction fetching and instruction execution.

A memory configured to store instructions and data may be further disposed in the processor 110. In some embodiments the memory in processor 110 is a cache memory.

The internal memory 121 may be configured to store computer-executable program code. The executable program code includes instructions. The processor 110 runs the instructions stored in the internal memory 121, to perform various function applications and data processing of the electronic device 100. The internal memory 121 may include a program storage area and a data storage area. The program storage area may store an operating system, an application required by at least one function (such as a sound playback function and an image playback function), and the like. The data storage area may store data (such as audio data and an address book) and the like created when the electronic device 100 is used. In addition, the internal memory 121 may include a high-speed random access memory, and may also include a nonvolatile memory, for example, at least one magnetic disk storage device, a flash memory device, or a universal flash storage (universal flash storage, UFS).

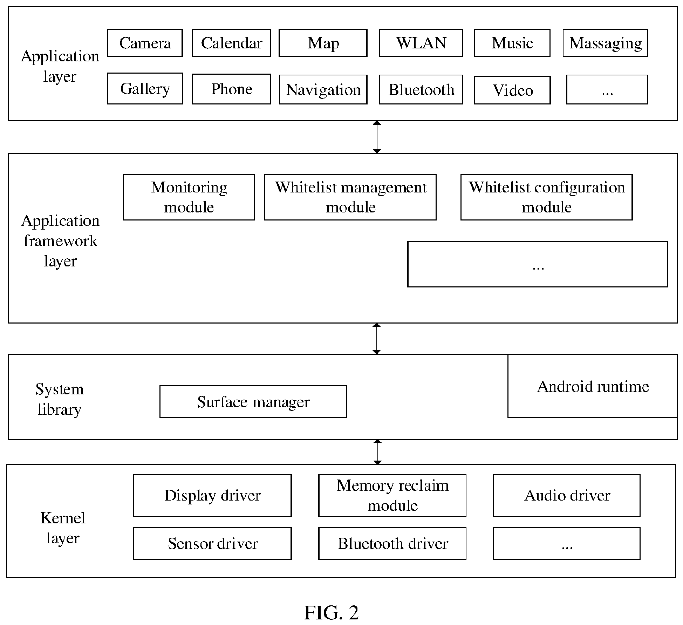

FIG. 2 is a block diagram of an example of a software structure of an electronic device 100 according to an embodiment of this application.

In a layered architecture of the electronic device 100, software is divided into several layers, and each layer has a clear role and task. The layers communicate with each other through a software interface. In some embodiments, an Android system may include an application layer, an application framework layer, a system library, and a kernel layer.

The application layer may include a series of application program packages.

As shown in FIG. 2, the application program package may include applications such as a camera, calendar, map, WLAN, music, massaging, gallery, phone, navigation, Bluetooth, video, and the like. Certainly, the applications are only examples. In other embodiments, the application layer may include applications not shown in FIG. 2, or may not include one or more applications shown in FIG. 2.

As shown in FIG. 2, the application framework layer may include a monitoring module, a whitelist management module, a whitelist configuration module, and the like.

The monitoring module is used to recognize a foreground application, and send a recognition result to the whitelist management module.

The whitelist configuration module is used to initialize configurations based on application configuration information entered by a user, and generates a configuration file. The configuration file may include one or more applications.

The whitelist management module is used to update an application whitelist based on the configuration file read from the whitelist configuration module and/or the foreground application recognition result sent by the monitoring module.

The Android runtime (Android Runtime) includes a kernel library and a virtual machine. The Android runtime is responsible for scheduling and managing an Android system.

The kernel library includes two parts: One part is a functional function that needs to be invoked by a Java language, and the other part is a kernel library of Android.

The application layer and the application framework layer run in the virtual machine. The virtual machine executes Java files of the application layer and the application framework layer as binary files. The virtual machine is configured to perform functions, such as object life cycle management, stack management, thread management, security and exception management, and garbage collection.

The system library may include a plurality of functional modules. As shown in FIG. 2, the system library may include a surface manager (surface manager), and the like.

The surface manager is configured to manage a display subsystem and provide fusion of 2D and 3D layers for a plurality of applications.

The kernel layer is a layer between hardware and software.

As shown in FIG. 2, the kernel layer may include drive modules such as an audio driver, a display driver, a Bluetooth driver, a memory reclaim module, and a sensor driver.

The memory reclaim module is used to perform the memory reclaim method provided in this embodiment. The memory reclaim module may obtain a whitelist from the whitelist management module, and set a reclaim level of an application in the whitelist to a preset level, for example, a lowest reclaim level.

It may be understood that the layers in the software structure shown in FIG. 2 and the component included in each layer do not constitute a specific limitation on the electronic device 100. In some other embodiments of this application, the electronic device 100 may include more or fewer layers than those shown in the figure, and each layer may include more or fewer components. This is not limited in this application.

The following uses a mobile phone as an example to describe the memory reclaim method provided in this embodiment. Certainly, the following embodiments are also applicable to other electronic devices other than the mobile phone, for example, a tablet computer, a television, and the like.

In the following embodiments, it is assumed that there are eight applications on the mobile phone, namely, an application 1 (that is, an APP1) to an application 8 (that is, an APP1). Memory control groups corresponding to the application 1 to the application 8 are respectively a memory control group 1 (that is, memcgl) to a memory control group 8 (that is, memcg8).

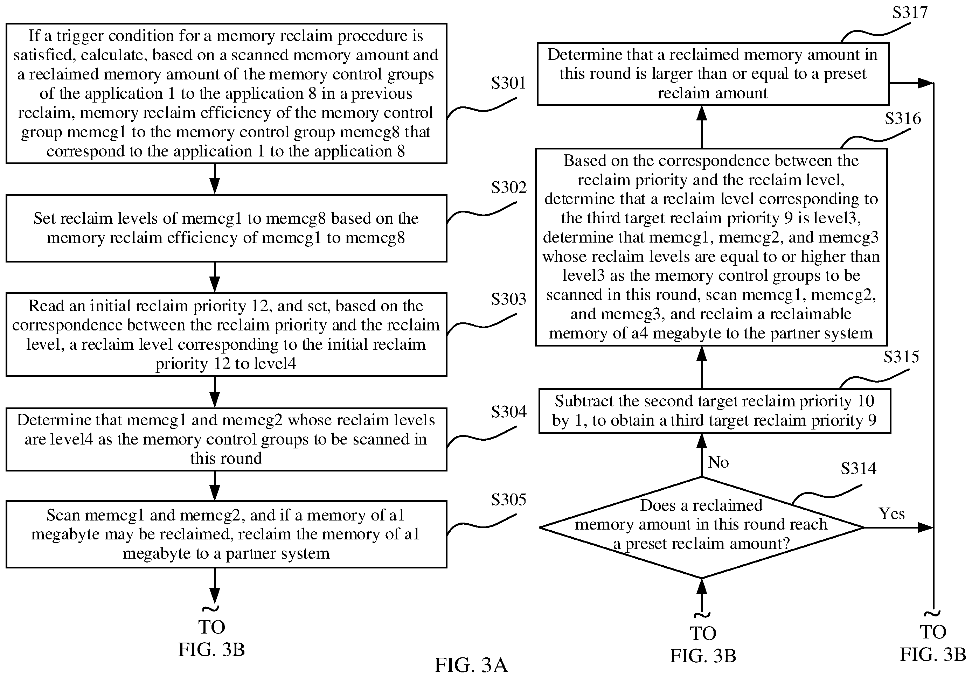

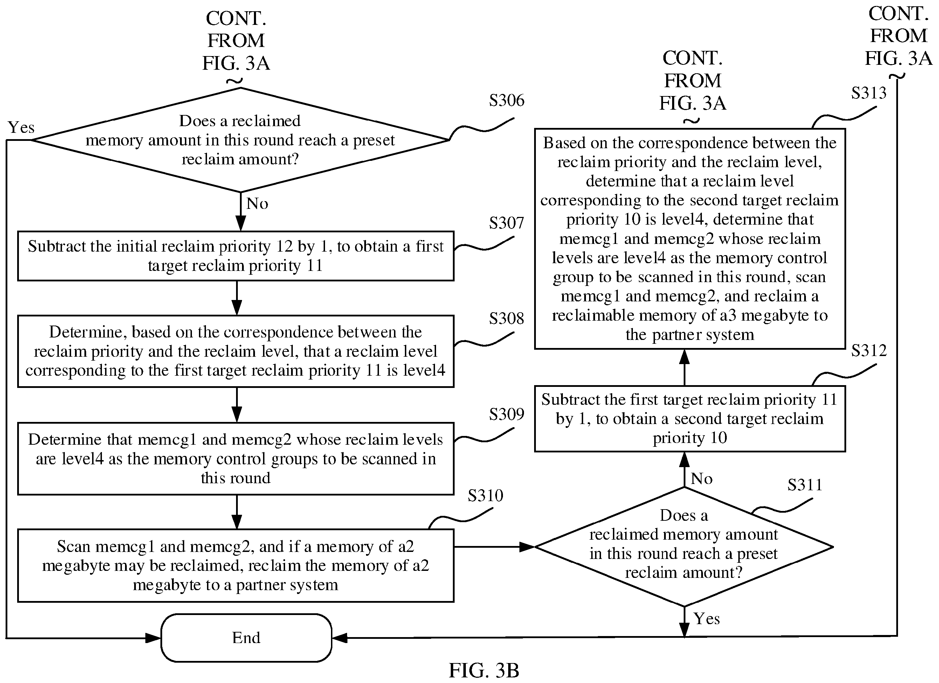

FIG. 3A and FIG. 3B are schematic flowcharts of an example of a memory reclaim method according to an embodiment. As shown in FIG. 3A and FIG. 3B, in this embodiment, the memory reclaim method may include the following steps.

S301: If a trigger condition for a memory reclaim procedure is satisfied, calculate, based on a scanned memory amount and a reclaimed memory amount of each of memory control groups of an application 1 to an application 8 in a previous reclaim, memory reclaim efficiency of each of a memory control group memcg1 to a memory control group memcg8 that correspond to the application 1 to the application 8.

In an example, the trigger condition for the memory reclaim procedure may be that a current free memory amount of the electronic device is lower than a first value. For example, it is assumed that there are three waterline values, namely, a first waterline value, a second waterline value, and a third waterline value, the first waterline value is greater than the second waterline value, and the second waterline value is greater than the third waterline value. It is assumed that the trigger condition for the memory reclaim procedure may be that the current free memory amount of the electronic device is lower than the second waterline value. Then, the second waterline value is the first value. In addition, it may be further specified that a preset reclaim amount in this case is equal to the first waterline value.

Certainly, the foregoing listed trigger condition for the memory reclaim procedure is only an example. In other embodiments, another trigger condition for the memory reclaim procedure may be set. For example, the memory reclaim procedure is triggered based on a system pressure or a specified event.

After the trigger condition for the memory reclaim procedure is satisfied, the memory reclaim procedure is triggered once. One or more rounds of memory reclaim may be performed during the memory reclaim procedure.

A manner of obtaining the memory reclaim efficiency of the memory control group memcg is explained herein.

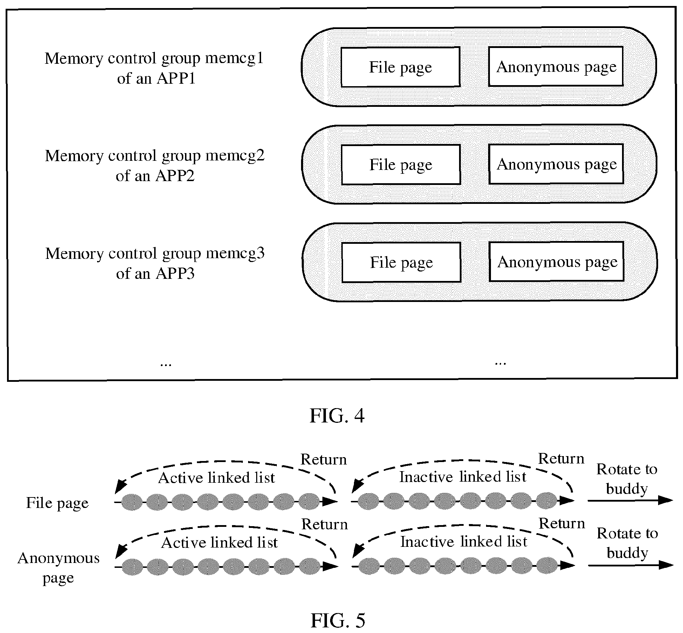

FIG. 4 is a schematic diagram of an example of memory control of a memory control group memcg of an application on a mobile phone. As shown in FIG. 4, a memory of each application (that is, APP) is set to one memory control group memcg. The memory of each memcg is divided into two categories, namely, a file page and an anonymous page.

FIG. 5 is a schematic diagram of an example of management of a linked list in each memory control group memcg. As shown in FIG. 5, four linked lists are managed in each memcg, namely, an active (active) linked list of the file page, an inactive (inactive) linked list of the file page, an active linked list of the anonymous page, and an inactive linked list of the anonymous page. A Linux kernel traverses and scans the four linked lists during memory reclaim of memcg, and reclaims a reclaimable memory to a buddy system and returns (rotates) a non-reclaimable memory to a head of the linked list.

In this specification, variables are defined as follows:
A scan amount (nr_scanned) is a memory amount scanned during a memory reclaim.

A reclaim amount (nr_reclaimed) is a memory amount reclaimed to a buddy system during a memory reclaim.

A return amount (nr_rotated) is a memory amount returned to the head of the linked list during a memory reclaim.

Memory reclaim efficiency (efficiency).

In this embodiment, the scan amount, the reclaim amount, and the return amount of the file page and those of the anonymous page may be recorded separately, and memory reclaim efficiency of the file page and the memory reclaim efficiency of the anonymous page are also calculated separately.

In this embodiment, the memory reclaim efficiency may be calculated according to the following formula (1).

$$efficiency = \frac{nr\_reclaimed}{nr\_scaned} \tag{1}$$

The file page and the anonymous page are reclaimed "separately". According to the formula (1), the memory reclaim efficiency (file_efficiency) of the file page and the memory reclaim efficiency (anon_efficiency) of the anonymous page may be calculated separately. To be specific, the memory reclaim efficiency of the file page is equal to a quotient obtained by dividing the reclaim amount of the file page by the scan amount of the file page, and the memory reclaim efficiency of the anonymous page is equal to a quotient obtained by dividing the reclaim amount of the anonymous page by the scanned amount of the anonymous page.

For an effective memory reclaim, when the scan amount is fixed, the larger reclaim amount indicates the higher memory reclaim efficiency. Conversely, the larger return amount indicates that it is more difficult to reclaim the memory of memcg during a period of time.

A reclaim rate of the file page is different from a reclaim rate of the anonymous page. Generally, the reclaim rate of the file page is far higher than the reclaim rate of the anonymous page. Therefore, in this embodiment, when overall memory reclaim efficiency of memcg is calculated, file_efficiency and anon_efficiency are not simply added, but a specific weight is assigned. For example, the overall memory reclaim efficiency of memcg may be calculated according to the following formula (2).

$$memcgefficiency = file\_efficiency * scale + anon\_efficiency \tag{2},$$

where

a parameter scale may be configured in the formula (2). For example, the parameter scale may be determined based on a ratio of the reclaim rate of the file page to the reclaim rate of the anonymous page during actual use.

It is assumed that the memory reclaim efficiency of the memory control group memcg1 to the memory control group memcg8 corresponding to the application 1 to the application 8 are calculated according to the formulas (1) and (2). The memory reclaim efficiency is shown in Table 1.

**Table 1**

| Memory control group | Memory reclaim efficiency |
|---|---|
| memcg1 | 86% |
| memcg2 | 81% |
| memcg3 | 66% |
| memcg4 | 55% |
| memcg5 | 52% |
| memcg6 | 45% |
| memcg7 | 35% |
| memcg8 | 16% |

S302: Set reclaim levels of memcg1 to memcg8 based on the memory reclaim efficiency of the memory control group memcg 1 to the memory control group memcg8.

In an example, the reclaim level of the memory control group may be set based on the memory reclaim efficiency of the memory control group in a manner as follows:

for each memory control group, determining a first reclaim efficiency range to which the memory reclaim efficiency of the memory control group belongs;
searching, a configured correspondence between a reclaim efficiency range and a reclaim level for a first reclaim level corresponding to the first reclaim efficiency range; and
setting the reclaim level of the memory control group to the first reclaim level.

To be specific, the reclaim efficiency range is determined based on the memory reclaim efficiency of memcg, and then the reclaim level of memcg is determined based on the reclaim efficiency range.

For example, it is assumed that the correspondence between the reclaim efficiency range and the reclaim level is shown in Table 2.

**Table 2**

| Reclaim efficiency range | Reclaim level |
|---|---|
| 100% $\geq$ memcg efficiency $\geq$ 80% | level4 |
| 80% > memcg efficiency $\geq$ 60% | level3 |
| 60% > memcg efficiency $\geq$ 40% | level2 |
| 40% > memcg efficiency $\geq$ 20% | level1 |
| 20% > memcg efficiency $\geq$ 0% | level0 |

level0 represents a lowest reclaim level, level4 represents a highest reclaim level, and level0 to level4 represent that reclaim levels are increased level by level.

In this way, memcg corresponding to each reclaim level may be determined according to Table 1 and Table 2, as shown in Table 3.

**Table 3**

| Reclaim level | Memory control group |
|---|---|
| level4 | memcg1 and memcg2 |

(continued)

| Reclaim level | Memory control group |
|---|---|
| level3 | memcg3 |
| level2 | memcg4, memcg5, and memcg6 |
| level1 | memcg7 |
| level0 | memcg8 |

It should be noted that although there are five reclaim levels in the examples above, in other embodiments, more or fewer reclaim levels may be set. A quantity of reclaim levels is not limited in this embodiment. In addition, the correspondence between the reclaim efficiency range and the reclaim level may be adjusted and is not limited to the correspondence shown in Table 2.

S303: Read an initial reclaim priority 12, and set, based on the correspondence between the reclaim priority and the reclaim level, a reclaim level corresponding to the initial reclaim priority 12 to level4.

In this embodiment, it is assumed that a range of the reclaim priority level is 0 to 12, if a value of the reclaim priority is larger, reclaim intensity is lower. A lower reclaim granularity means a smaller scanning range of reclaim. Certainly, in other embodiments, a larger or smaller range of reclaim priority may be set, without being limited to 0 to 12.

It should be noted that one or more rounds of memory reclaim may be performed in a memory reclaim procedure, which is determined based on a total amount (that is, the preset reclaim amount) of memory to be reclaimed in this memory reclaim procedure. In this embodiment, the initial reclaim priority is 12, for each reclaim performed, if the amount of memory reclaimed does not meet requirements, the value of the reclaim priority is subtracted by 1, and then a next round of reclaim is continuously performed until the amount of memory reclaimed meets the requirements.

It is assumed that the correspondence between the reclaim priority and the reclaim level is shown in Table 4.

**Table 4**

| Reclaim level | Reclaim priority |
|---|---|
| level4 | 12-10 |
| level3 | 9-7 |
| level2 | 6-4 |
| level1 | 3-2 |
| level0 | 1-0 |

Through querying Table 4, the reclaim priority 12 corresponds to the reclaim level 4.

In an example, the initial priority may be fixed. For example, it may set that the initial priority is equal to a value of a highest reclaim priority within the range of reclaim priority.

In another example, the initial priority may be variable. For example, the initial reclaim priority may be determined based on a preset reclaim amount for each memory reclaim procedure. The larger preset reclaim amount indicates the lower determined initial reclaim priority. In this way, the initial reclaim priority may be flexibly set based on the amount of memory to be reclaimed, which is conducive to reducing time consumed on memory reclaim and improving the memory reclaim efficiency.

S304: Determine that memcg1 and memcg2 whose reclaim levels are level4 as the memory control groups to be scanned in round.

In this example, because level4 is the highest reclaim level, the only reclaim level higher than or equal to level4 is level4. Therefore, memcg whose reclaim level is level4 is determined as the memory control group to be scanned in this round. According to Table 3, there are two memory control groups, namely, memcg1 and memcg2, whose corresponding reclaim levels are higher than or equal to level4. Therefore, memcg1 and memcg2 are determined as the memory control groups to be scanned in this round.

S305: Scan memcg1 and memcg2, and if a memory of a1 megabyte may be reclaimed, reclaim the memory of a1 megabyte to a partner system.

The memory of a1 megabyte is successfully reclaimed in this round.

S306: Determine whether an amount a1 of memory reclaimed in this round reaches a preset reclaim amount b. If the amount a1 of the memory reclaimed in this round does not reach the preset reclaim amount b, perform step S307. If the amount a1 of the memory reclaimed in this round reaches the preset reclaim amount b, end the memory reclaim procedure.

S307: Subtract the initial reclaim priority 12 by 1, to obtain a first target reclaim priority 11.

In this embodiment, a subtracted step of the reclaim priority is 1. In other embodiments, another step may be set. For example, the subtracted step of the reclaim priority in this round may be determined based on a difference between a total currently reclaimed memory amount in this round and the preset reclaim amount. If the difference is larger, a value of the step is larger. Alternatively, the subtracted step of the reclaim priority in this round may be determined based on a ratio of the difference between a total currently reclaimed memory amount in this round and the preset reclaim amount to the preset reclaim amount. If the ratio is larger, a value of the step is larger. In this way, a reclaim scanning range may be expanded faster, to improve the reclaim efficiency.

S308: Determine, based on the correspondence between the reclaim priority and the reclaim level, that a reclaim level corresponding to the first target reclaim priority 11 is level4.

As shown in Table 4, a reclaim level corresponding to the reclaim priority 11 is also level4.

S309: Determine that memcg1 and memcg2 whose reclaim levels are level4 as the memory control groups to be scanned in round.

S310: Scan memcg1 and memcg2, and if a memory of a2 megabyte may be reclaimed, reclaim the memory of a2 megabyte to the partner system.

S311: Determine whether an amount (a1 + a2) of memory reclaimed in this round reaches a preset reclaim amount b. If the amount (a1 + a2) of memory reclaimed in this round does not reach the preset reclaim amount b, perform step S312. If the amount (a1 + a2) of memory reclaimed in this round reaches the preset reclaim amount b, end the memory reclaim procedure.

S312: Subtract the first target reclaim priority 11 by 1, to obtain a second target reclaim priority 10.

S313: Based on the correspondence between the reclaim priority and the reclaim level, determine that a reclaim level corresponding to the second target reclaim priority 10 is level4, and determine that memcg1 and memcg2 whose reclaim levels are level4 as the memory control groups to be scanned in this round, scan memcg1 and memcg2, and reclaim a reclaimable memory of a3 megabyte to the partner system.

S314: Determine whether an amount (a1 + a2 + a3) of memory reclaimed in this round reaches the preset reclaim amount b. If the amount (a1 + a2 + a3) of memory reclaimed in this round does not reach the preset reclaim amount b, perform step S315. If the amount (a1 + a2 + a3) of memory reclaimed in this round reaches the preset reclaim amount b, end the memory reclaim procedure.

S315: Subtract the second target reclaim priority 10 by 1, to obtain a third target reclaim priority 9.

S316: Based on the correspondence between the reclaim priority and the reclaim level, determine that a reclaim level corresponding to the third target reclaim priority 9 is level3, and determine that memcg1, memcg2, and memcg3 whose reclaim levels are equal to or higher than level3 as the memory control groups to be scanned in this round, and scan memcg1, memcg2, and memcg3, reclaim a reclaimable memory of a4 megabyte to the partner system.

As shown in Table 4, a reclaim level corresponding to the reclaim priority 9 is level3.

In this example, because there are two reclaim levels higher than or equal to level3, namely, level3 and level4, memcg whose reclaim level is level3 and memcg whose reclaim level is level4 are determined as the memory control groups to be scanned in this round. According to Table 3, there are three memory control groups, namely, memcg1, memcg2, and memcg3, whose corresponding reclaim levels are higher than or equal to level3. Therefore, memcg1, memcg2, and memcg3 are determined as the memory control groups to be scanned in this round.

S317: Determine that an amount (a1 + a2 + a3 + a4) of memory reclaimed in this round is larger than or equal to the preset reclaim amount b, and end the memory reclaim procedure.

It should be noted that if the amount (a1 + a2 + a3 + a4) of memory reclaimed in this round is still smaller than the preset reclaim amount b, the reclaim priority needs to be continuously reduced, the memory control group memcg to be scanned is determined based on the reduced reclaim priority, and the memory is continuously reclaimed, until the amount of memory reclaimed is greater than or equal to the preset reclaim amount b.

In this memory reclaim procedure, the reclaimed memory amount and the scanned memory amount of each memory control group may be recorded and stored. In addition, a reclaimed memory amount and a scanned memory amount of a file page and an anonymous page of a same memory control group may be recorded and stored separately, so that memory reclaim efficiency of each memory control group can be calculated in a next memory reclaim process.

It can be learned from the foregoing embodiment that, the memory reclaim method provided in this embodiment, Because the memory reclaim level is configured based on the memory reclaim efficiency of the memory control group corresponding to each application, reclaim probability of different memory control groups is controlled. Therefore, a case in which probability of all memory control groups is the same is changed, to enable a memory control group whose memory is easy to be reclaimed to be ranked ahead, and first reclaim the memory of the memory control group whose memory is easy to be reclaimed. In a case in which a reclaimed memory amount of the memory control group whose memory is easy to be reclaimed meets a requirement, another memory that is difficult to be reclaimed is not reclaimed, to effectively avoid excessive reclaim of the memory. This reduces the time consumed on processing of memory reclaim, and improves the overall memory reclaim efficiency of the system.

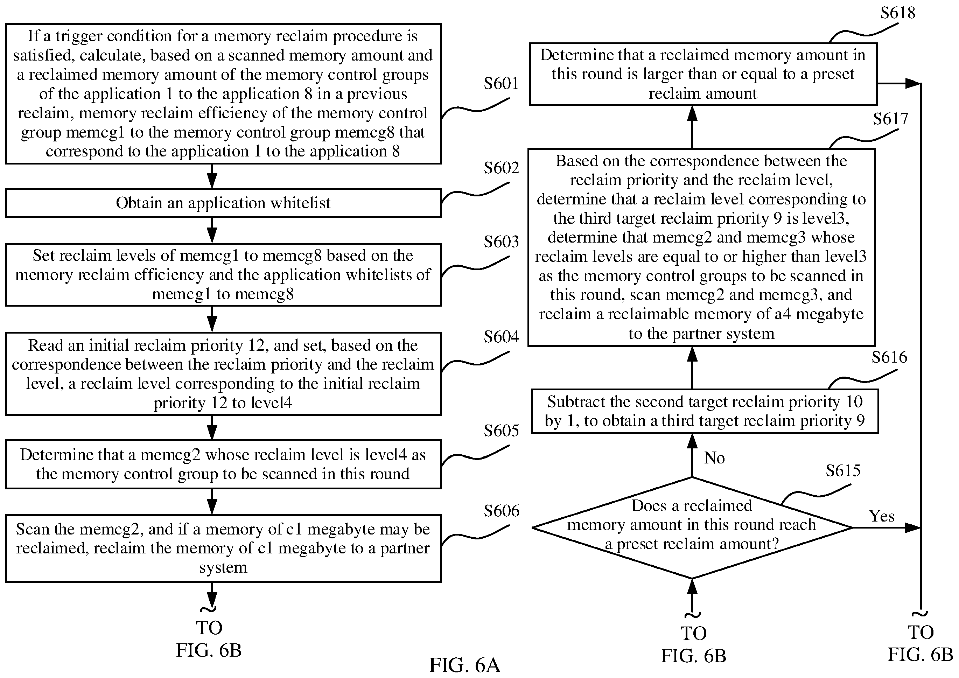

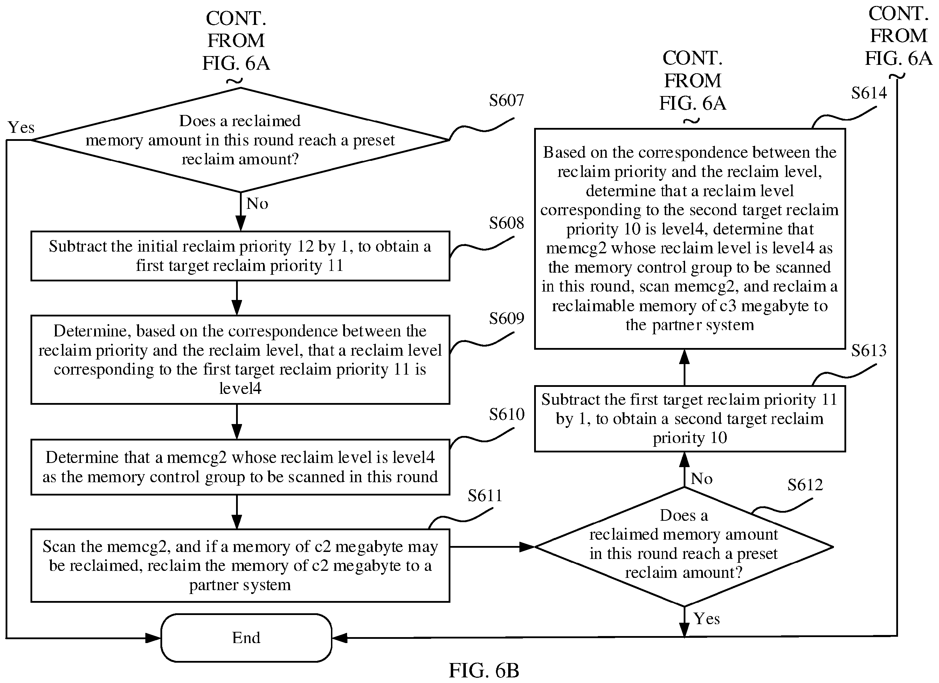

FIG. 6A and FIG. 6B are schematic flowcharts of another example of a memory reclaim method according to an embodiment. As shown in FIG. 6A and FIG. 6B, in this embodiment, the memory reclaim method may include the following steps.

S601: If a trigger condition for a memory reclaim procedure is satisfied, calculate, based on a scanned memory amount and a reclaimed memory amount of each of memory control groups of an application 1 to an application 8 in a previous reclaim, memory reclaim efficiency of each of a memory control group memcg1 to a memory control group memcg8 that correspond to the application 1 to the application 8.

It is assumed that the memory reclaim efficiency of the memory control group memcg1 to the memory control group memcg8 is still shown in Table 1.

S602: Obtain an application whitelist.

It is assumed that an application 1, an application 5, and an application 7 are recorded in the application whitelist.

It should be noted that at least one application may be recorded in the application whitelist. In this embodiment, a lower reclaim level is set for a memory control group corresponding to an application in the application whitelist, to reduce probability of reclaiming memory of the memory control group corresponding to the application in the application whitelist.

In an example, the obtaining an application whitelist may include: reading a first whitelist from an existing configuration file. The configuration file is generated by a whitelist configuration module in FIG. 2.

In this embodiment, an application in the first whitelist is an application in the configuration file. The application in the configuration file may be pre-configured.

In an example, the obtaining an application whitelist may include:

recognizing a foreground application; and
generating a second whitelist based on the recognized foreground application, where an application in the second whitelist is the foreground application.

In this embodiment, the application in the second whitelist is a current foreground application. If there is no floating window on an interface of a mobile phone, an application on a current main interface of the mobile phone is the foreground application. If there is a floating window on an interface of a mobile phone, an application on a current main interface of the mobile phone and an application in the floating window are the foreground applications.

In an example, the obtaining an application whitelist may include: reading a first whitelist from an existing configuration file;

recognizing a foreground application; and
adding the foreground application to the first whitelist, to obtain a third whitelist.

In this embodiment, an application in the third whitelist includes the application in the configuration file and the current foreground application. That is, the application in the third whitelist includes the application in the first whitelist and the application in the second whitelist.

S603: Set reclaim levels of memcg1 to memcg8 based on the memory reclaim efficiency and the application whitelists of the memory control group memcg1 to the memory control group memcg8.

In this embodiment, the reclaim level is set based on the memory reclaim efficiency of the memory control group and the application whitelist. The following uses an example to describe a manner of setting the reclaim level based on the memory reclaim efficiency of the memory control group and the application whitelist.

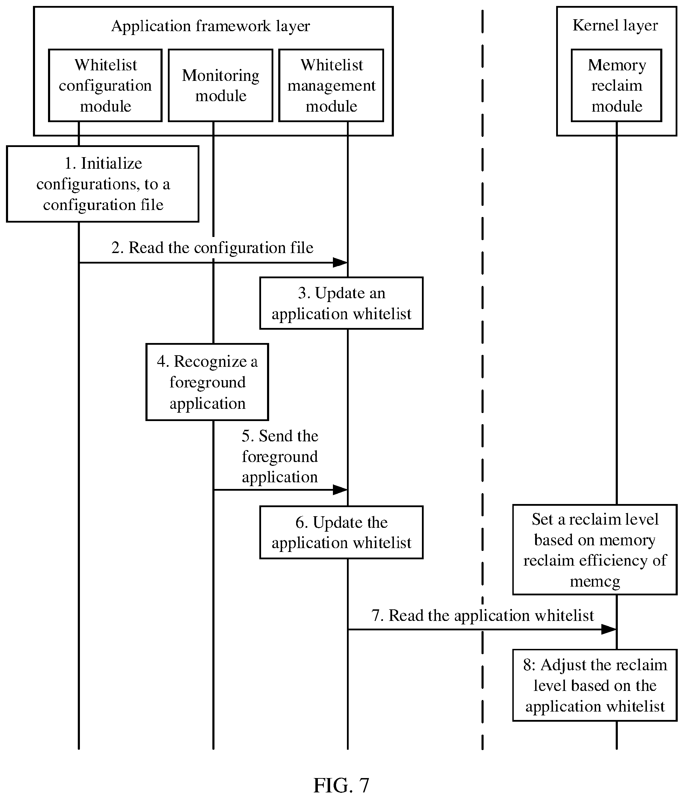

FIG. 7 is a schematic diagram of an example of a relationship between update of an application whitelist and setting of a reclaim level of a memory control group according to an embodiment. As shown in FIG. 7, in this embodiment, a manner of setting a reclaim level may include the following steps.

1. A whitelist configuration module initializes configurations based on application configuration information entered by a user, and generates a configuration file.

The configuration file includes a name of an application, for example, an application 1 and an application 5.

It should be noted that the configuration file may not be changed after being configured once. In this way, the application in the configuration file is fixed. A developer may write, based on statistical data of use of applications, one or more of most commonly used applications to the configuration file, to subsequently set reclaim levels of memory control groups of these most commonly used applications to a lower level, for example, a lowest level0. Therefore, probability of reclaiming memory of the memory control groups of the most commonly used applications is reduced. In this way, the number of times of reclaiming the memory of the memory control groups of the most commonly used applications is reduced, and impact of memory reclaim on use of the most commonly used applications is reduced, for example, freezing caused by memory reclaim is reduced. This improves user experience.

2. A whitelist management module reads the configuration file from the whitelist configuration module.

3. The whitelist management module updates the application whitelist based on the configuration file, where the updated application whitelist is a first whitelist.

It is assumed that the updated application whitelist includes two applications, namely, an application 1 and an application 5.

4. A monitoring module recognizes a foreground application.

It is assumed that the foreground application is an application 7.

5. The monitoring module sends the recognized foreground application to the whitelist management module.

6. The whitelist management module updates the application whitelist based on the foreground application, where the updated application whitelist is a third whitelist.

In this step, the whitelist management module adds the foreground application to the first whitelist that is obtained after update in step 3, that is, the third whitelist.

The updated application whitelist includes three applications, namely, the application 1, and the application 5, and the application 7.

In this way, the foreground application is added to the application whitelist, so that a reclaim level of the memory control group of the foreground application is set to a lower level, for example, a lowest level level0, to reduce probability of reclaiming memory of the memory control group of the foreground application. In this way, the number of times of reclaiming the memory of the memory control group of the foreground application is reduced, so that impact of memory reclaim on use of the foreground application is reduced, for example, freezing of the foreground application caused by memory reclaim is reduced. This improves user experience.

7. A memory reclaim module reads the application whitelist from the whitelist management module.

Before this step, the memory reclaim module sets the reclaim level based on memory reclaim efficiency of memcg, as shown in Table 3. For a detailed setting procedure of the reclaim level in Table 3, refer to descriptions in step S302. Details are not described herein again.

8: Adjust the reclaim level based on the application whitelist.

For example, it is assumed that an adjustment strategy is to adjust a reclaim level of memcg corresponding to the application in the application whitelist to the lowest level level0, then after the adjustment, memcgs corresponding to reclaim levels are shown in Table 5.

Table 5

| Reclaim level | Memory control group |
|---|---|
| level4 | memcg2 |
| level3 | memcg3 |
| level2 | memcg4 and memcg6 |
| level1 | |
| level0 | memcg1, memcg5, memcg7, and memcg8 |

It should be noted that, in the example, the application whitelist is generated based on the configuration file and the foreground application. In other embodiments, the application whitelist may also be generated based on only the configuration file or only the foreground application.

In a case in which the application whitelist is generated based only the configuration file, the application whitelist is the first whitelist (the first whitelist includes the application 1 and the application 5). In this case, the setting procedure of the reclaim level may exclude step 4 to step 6 in FIG. 7, and the adjusted reclaim level is shown in Table 6.

Table 6

| Reclaim level | Memory control group |
|---|---|
| level4 | memcg2 |
| level3 | memcg3 |
| level2 | memcg4 and memcg6 |
| level1 | memcg7 |
| level0 | memcg1, memcg5, and memcg8 |

In a case in which the application whitelist is generated based only the foreground application, the application whitelist is the second whitelist (the second whitelist includes the foreground application 7). In this case, the setting procedure of the reclaim level may exclude step 1 to step 3 in FIG. 7, and the adjusted reclaim level is shown in Table 7.

Table 7

| Reclaim level | Memory control group |
|---------------|----------------------|
| level4 | memcg1 and memcg2 |
| level3 | memcg3 |
| level2 | memcg4, memcg5, and memcg6 |
| level1 | |
| level0 | memcg7 and memcg8 |

S604: Read an initial reclaim priority 12, and set, based on the correspondence between the reclaim priority and the reclaim level, a reclaim level corresponding to the initial reclaim priority 12 to level4.

Through querying Table 4, the reclaim priority 12 corresponds to the reclaim level 4.

S605: Determine that memcg2 whose reclaim level is level4 as the memory control group to be scanned in this round.

In this example, because level4 is the highest reclaim level, the only reclaim level higher than or equal to level4 is level4. Therefore, memcg whose reclaim level is level4 is determined as the memory control group to be scanned in this round. According to Table 5, there is one memory control group, namely, memcg2, whose corresponding reclaim level is higher than or equal to level4. Therefore, memcg2 is determined as the memory control group to be scanned in this round.

S606: Scan memcg2, and if a memory of c1 megabyte may be reclaimed, reclaim the memory of c1 megabyte to a partner system.

The memory of c1 megabyte is successfully reclaimed in this round.

S607: Determine whether an amount c1 of memory reclaimed in this round reaches a preset reclaim amount b. If the amount c1 of the memory reclaimed in this round does not reach the preset reclaim amount b, perform step S608. If the amount c1 of the memory reclaimed in this round reaches the preset reclaim amount b, end the memory reclaim procedure.

S608: Subtract the initial reclaim priority 12 by 1, to obtain a first target reclaim priority 11.

In this embodiment, it is still assumed that a subtracted step of the reclaim priority is 1. In other embodiments, another step may be set. Alternatively, the subtracted step of the reclaim priority is determined based on a difference between a total amount of memory reclaimed and the preset reclaim amount.

S609: Determine, based on the correspondence between the reclaim priority and the reclaim level, that a reclaim level corresponding to the first target reclaim priority 11 is level4.

As shown in Table 4, a reclaim level corresponding to the reclaim priority 11 is also level4.

S610: Determine that memcg2 whose reclaim level is level4 as the memory control group to be scanned in this round.

S611: Scan memcg2, and if a memory of c2 megabyte may be reclaimed, reclaim the memory of c2 megabyte to a partner system.

S612: Determine whether an amount (c1 + c2) of memory reclaimed in this round reaches a preset reclaim amount b. If the amount (c1 + c2) of memory reclaimed in this round does not reach the preset reclaim amount b, perform step S613. If the amount (c1 + c2) of memory reclaimed in this round reaches the preset reclaim amount b, end the memory reclaim procedure.

S613: Subtract the first target reclaim priority 11 by 1, to obtain a second target reclaim priority 10.

S614: Based on the correspondence between the reclaim priority and the reclaim level, determine that a reclaim level corresponding to the second target reclaim priority 10 is level4, and determine that memcg2 whose reclaim level is level4 as the memory control group scanned in this round, scan memcg2, and reclaim a reclaimable memory of c3 megabyte to the partner system.

S615: Determine whether an amount (c1 + c2 + c3) of memory reclaimed in this round reaches the preset reclaim amount b. If the amount (c1 + c2 + c3) of memory reclaimed in this round does not reach the preset reclaim amount b, perform step S616. If the amount (c1 + c2 + c3) of memory reclaimed in this round reaches the preset reclaim amount b, end the memory reclaim procedure.

S616: Subtract the second target reclaim priority 10 by 1, to obtain a third target reclaim priority 9.

S617: Based on the correspondence between the reclaim priority and the reclaim level, determine that a reclaim level corresponding to the third target reclaim priority 9 is level3, and determine that memcg2 and memcg3 whose reclaim levels are equal to or higher than level3 as the memory control groups to be scanned in this round, and scan memcg2 and memcg3, reclaim a reclaimable memory of a4 megabyte to the partner system.

As shown in Table 4, a reclaim level corresponding to the reclaim priority 9 is level3.

In this example, because there are two reclaim levels higher than or equal to level3, namely, level3 and level4, memcg whose reclaim level is level3 and memcg whose reclaim level is level4 are determined as the memory control groups to be scanned in this round. According to Table 5, there are two memory control groups, namely, memcg2 and memcg3, whose corresponding reclaim levels are higher than or equal to level3. Therefore, memcg2 and memcg3 are determined as the memory control groups to be scanned in this round.

S618: Determine that an amount $(c_1 + c_2 + c_3 + c_4)$ of memory reclaimed in this round is larger than or equal to the preset reclaim amount b, and end the memory reclaim procedure.

It should be noted that if the amount $(c_1 + c_2 + c_3 + c_4)$ of memory reclaimed in this round is still smaller than the preset reclaim amount b, the reclaim priority needs to be continuously reduced, the memory control group memcg to be scanned is determined based on the reduced reclaim priority, and the memory is continuously reclaimed, until the amount of memory reclaimed is greater than or equal to the preset reclaim amount b.

In this memory reclaim procedure, the reclaimed memory amount and the scanned memory amount of each memory control group may be recorded and stored. In addition, a reclaimed memory amount and a scanned memory amount of a file page and an anonymous page of a same memory control group may be recorded and stored separately, so that memory reclaim efficiency of each memory control group can be calculated in a next memory reclaim process.

It can be learned from the foregoing embodiment that, the memory reclaim method provided in this embodiment, Because the memory reclaim level is configured based on the memory reclaim efficiency and use of the application of the memory control group corresponding to each application, reclaim probability of different memory control groups is controlled. Therefore, a case in which probability of all memory control groups is the same is changed, to enable a memory control group whose memory is easy to be reclaimed to be ranked ahead, enable the reclaim level of the commonly used application and/or the foreground application to be ranked lower, and first reclaim the memory of the memory control group whose memory is easy to be reclaimed. This effectively avoids excessive reclaim of the memory, reduces time consumed on processing of memory reclaim, and improves overall memory reclaim efficiency of the system. In addition, in the memory reclaim method provided in this embodiment, a large amount of memory of a rarely used APP is reclaimed, and a small amount of memory of the commonly used and important APP is reclaimed. Therefore, probability of reclaiming the memory of the memory control group of the commonly used application and/ foreground application is reduced. This reduces impact of memory reclaim on use of the commonly used application and/ the foreground application, and improves user experience of a user.

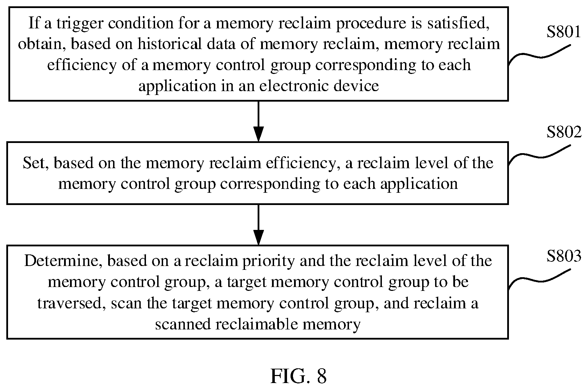

FIG. 8 is a schematic flowchart of another example of a memory reclaim method according to an embodiment. As shown in FIG. 8, in this embodiment, the memory reclaim method may include the following steps.

S801: If a trigger condition for a memory reclaim procedure is satisfied, obtain, based on historical data of memory reclaim, memory reclaim efficiency of a memory control group corresponding to each application in an electronic device.

S802. Set, based on the obtained memory reclaim efficiency, a reclaim level of the memory control group corresponding to each application.

S803. Determine, based on a reclaim priority and the reclaim level of the memory control group, a target memory control group to be traversed, scan the target memory control group, and reclaim a scanned reclaimable memory.

An embodiment of this application further provides an electronic device. The electronic device includes a memory and a processor. The memory is coupled to the processor. The memory stores program instructions, and when the program instructions are executed by the processor, the electronic device is enabled to perform the memory reclaim method.

It may be understood that, to implement the foregoing functions, the electronic device includes corresponding hardware and/or software modules for performing the functions. Algorithm steps in the examples described with reference to the embodiments disclosed in this specification can be implemented by hardware or a combination of hardware and computer software in this application. Whether a function is performed by hardware or computer software driving hardware depends on particular applications and design constraints of the technical solutions. A person of skill in the art may use different methods to implement the described functions with reference to the embodiments for each particular application.

An embodiment further provides a computer storage medium. The computer storage medium stores computer instructions. When the computer instructions are run on an electronic device, the electronic device is enabled to perform the steps of the related method to implement the memory reclaim method in the foregoing embodiments.

An embodiment further provides a computer program product. When the computer program product is run on a computer, the computer is enabled to perform the foregoing related steps to implement the memory reclaim method in the foregoing embodiments.

In addition, an embodiment of this application further provides an apparatus. The apparatus may be specifically a chip, a component, or a module. The apparatus may include a processor and a memory that are connected to each other. The memory is configured to store computer-executable instructions. When the apparatus runs, the processor may execute the computer-executable instructions stored in the memory, to enable the chip to perform the memory reclaim method in the foregoing method embodiments.

The electronic device, the computer storage medium, the computer program product, or the chip provided in the embodiments may be configured to perform the corresponding method provided above. Therefore, for beneficial effects that can be achieved, refer to the beneficial effects of the corresponding method provided above. Details are not described herein again.

According to the foregoing descriptions of the implementations, a person skilled in the art may understand that for the purpose of convenient and brief description, division into the foregoing functional modules is merely used as an example for illustration. During actual application, the foregoing functions can be allocated to different functional modules for implementation based on a requirement, that is, an inner structure of an apparatus is divided into different functional modules to implement all or a part of the functions described above.

In the several embodiments provided in this application, it should be understood that the disclosed apparatus and method may be implemented in other manners. For example, the described apparatus embodiment is merely an example. For example, the module or unit division is merely logical function division and may be other divisions in actual implementation. For example, a plurality of units or components may be combined or integrated into another apparatus, or some features may be ignored or not performed. In addition, the displayed or discussed mutual couplings or direct couplings or communication connections may be implemented through some interfaces. The indirect couplings or communication connections between the apparatuses or units may be implemented in electrical, mechanical, or another form.

The units described as separate parts may or may not be physically separate, and parts displayed as units may be one or more physical units, may be located in one place, or may be distributed in multiple different places. Some or all of the units may be selected according to actual needs to achieve the objectives of the solutions of the embodiments.

In addition, functional units in embodiments of this application may be integrated into one processing unit, each of the units may exist alone physically, or two or more units are integrated into one unit. The integrated unit may be implemented in a form of hardware or a software function unit.

If the integrated unit is implemented in the form of a software functional unit and sold or used as an independent product, the integrated unit may be stored in a readable storage medium. Based on such an understanding, the technical solutions in the embodiments of this application essentially, or the part contributing to the prior art, or all or some of the technical solutions may be implemented in the form of a software product. The software product is stored in a storage medium and includes several instructions for instructing a device (which may be a single-chip microcomputer, a chip, or the like) or a processor (processor) to perform all or some of the steps of the methods described in the embodiments of this application. The foregoing storage medium includes: any medium that can store program code, such as a USB flash drive, a removable hard disk, a read only memory (read only memory, ROM), a random access memory (random access memory, RAM), a magnetic disk, or a compact disc.

The embodiments of this application have been described above with reference to the accompanying drawings. This application is not limited to the specific implementations described above, and the specific implementations described above are merely exemplary and not limitative.

Methods or algorithm steps described in combination with the content disclosed in the embodiments of this application may be implemented by hardware, or may be implemented by a processor by executing a software instruction. The software instruction may include a corresponding software module. The software module may be stored in a random access memory (Random Access Memory, RAM), a flash memory, a read only memory (Read Only Memory, ROM), an erasable programmable read only memory (Erasable Programmable ROM, EPROM), an electrically erasable programmable read only memory (Electrically EPROM, EEPROM), a register, a hard disk, a removable hard disk, a CD-ROM (CD-ROM), or any other form of storage medium familiar with the art. For example, a storage medium is coupled to a processor, so that the processor can read information from the storage medium or write information into the storage medium. Certainly, the storage medium may alternatively be an integral part of the processor. The processor and the storage medium may be located in an ASIC.

A person skilled in the art should be aware that in the one or more examples, the functions described in the embodiments of this application may be implemented by using hardware, software, firmware, or any combination thereof. When implemented by software, the functions may be stored in a computer-readable medium or used as one or more instructions or code in a computer-readable medium for transferring. The computer-readable medium includes a computer storage medium and a communication medium, where the communication medium includes any medium that enables a computer program to be transmitted from one place to another. The storage medium may be any available medium accessible to a general-purpose or special-purpose computer.

The embodiments of this application have been described above with reference to the accompanying drawings. This application is not limited to the specific implementations described above, and the specific implementations described above are merely exemplary and not limitative.

**Claims**

1. A memory reclaim method, applied to an electronic device (100), wherein the method comprises:

   obtaining (S801), based on historical data of memory reclaim, memory reclaim efficiency of a memory control group corresponding to each application on the current electronic device (100), if a trigger condition for a memory reclaim procedure is satisfied;
   setting (S802), based on the obtained memory reclaim efficiency, a reclaim level of the memory control group corresponding to each application; and
   determining (S803), based on a reclaim priority and the reclaim level of each memory control group, a target memory control group that needs to be traversed, scanning the target memory control group, and reclaiming a scanned reclaimable memory,
   **characterised in that**
   the obtaining, based on historical data of memory reclaim, memory reclaim efficiency of a memory control group corresponding to each application on the current electronic device comprises:

      for each application, obtaining a scanned memory amount and a reclaimed memory amount of the memory control group corresponding to the application in a previous reclaim; and
      determining, based on the scanned memory amount and the reclaimed memory amount, the memory reclaim efficiency of the memory control group corresponding to the application,
      wherein the determining, based on the scanned memory amount and the reclaimed memory amount, the memory reclaim efficiency of the memory control group corresponding to the application comprises:

         determining first memory reclaim efficiency of a file page of the memory control group based on a first scanned memory amount and a first reclaimed memory amount of the file page of the memory control group corresponding to the application in the previous reclaim;
         determining second memory reclaim efficiency of an anonymous page of the memory control group based on a second scanned memory amount and a second reclaimed memory amount of the anonymous page of the memory control group corresponding to the application in the previous reclaim; and
         determining, based on the first memory reclaim efficiency and the second memory reclaim efficiency, the memory reclaim efficiency of the memory control group corresponding to the application.

2. The method according to claim 1, wherein the setting, based on the obtained memory reclaim efficiency, a reclaim level of the memory control group corresponding to each application comprises:

   for each memory control group, determining a first reclaim efficiency range to which the memory reclaim efficiency of the memory control group belongs;
   searching a configured correspondence between a reclaim efficiency range and a reclaim level for a first reclaim level corresponding to the first reclaim efficiency range; and
   setting the reclaim level of the memory control group to the first reclaim level.

3. The method according to claim 1, the setting, based on the obtained memory reclaim efficiency, a reclaim level of the memory control group corresponding to each application comprises:

   obtaining an application whitelist (S602), wherein at least one first application is recorded in the application whitelist; and
   setting (S603), based on the obtained memory reclaim efficiency and the application whitelist, the reclaim level of the memory control group corresponding to each application.

4. The method according to claim 3, wherein the obtaining an application whitelist comprises:

   reading a first whitelist from an existing configuration file; and
   the setting, based on the obtained memory reclaim efficiency and the application whitelist, the reclaim level of the memory control group corresponding to each application comprises:

      for each memory control group, determining a first reclaim efficiency range to which the memory reclaim efficiency of the memory control group belongs;

searching a configured correspondence between a reclaim efficiency range and a reclaim level for a first reclaim level corresponding to the first reclaim efficiency range;

setting the reclaim level of the memory control group to the first reclaim level; and

adjusting, to a second reclaim level, a reclaim level of a memory control group corresponding to a first application in the first whitelist.

5. The method according to claim 3, wherein the obtaining an application whitelist comprises:

recognizing a foreground application; and

generating a second whitelist based on the recognized foreground application, wherein an application in the second whitelist is the foreground application; and

the setting, based on the obtained memory reclaim efficiency and the application whitelist, the reclaim level of the memory control group corresponding to each application comprises:

for each memory control group, determining a first reclaim efficiency range to which the memory reclaim efficiency of the memory control group belongs;

searching a configured correspondence between a reclaim efficiency range and a reclaim level for a first reclaim level corresponding to the first reclaim efficiency range;

setting the reclaim level of the memory control group to the first reclaim level; and

adjusting, to a second reclaim level, a reclaim level of a memory control group corresponding to the foreground application.

6. The method according to claim 3, wherein the obtaining an application whitelist comprises:

reading a first whitelist from an existing configuration file;

recognizing a foreground application; and

adding the foreground application to the first whitelist, to obtain a third whitelist; and

the setting, based on the obtained memory reclaim efficiency and the application whitelist, the reclaim level of the memory control group corresponding to each application comprises:

for each memory control group, determining a first reclaim efficiency range to which the memory reclaim efficiency of the memory control group belongs;

searching a configured correspondence between a reclaim efficiency range and a reclaim level for a first reclaim level corresponding to the first reclaim efficiency range;

setting the reclaim level of the memory control group to the first reclaim level; and

adjusting, to a second reclaim level, a reclaim level of a memory control group corresponding to each application in the third whitelist.

7. The method according to any one of claims 3 to 6, wherein the second reclaim level is a lowest reclaim level.

8. The method according to any one of claim 2, and claims 4 to 6, wherein in the correspondence between the reclaim efficiency range and the reclaim level, a higher value of reclaim efficiency corresponding to a reclaim efficiency range indicates a higher reclaim level corresponding to the reclaim efficiency range.

9. The method according to claim 1, wherein the memory reclaim efficiency of the memory control group corresponding to the application is equal to a sum of the second memory reclaim efficiency and a product of the first memory reclaim efficiency and a first coefficient.

10. The method according to claim 9, wherein the first coefficient is determined based on a ratio of a reclaim rate of the file page to a reclaim rate of the anonymous page.

11. The method according to claim 1, wherein the determining, based on a reclaim priority and the reclaim level of each memory control group, a target memory control group that needs to be traversed, scanning the target memory control group, and reclaiming a scanned reclaimable memory comprises:

determining, based on a correspondence between a reclaim priority and a reclaim level, a first target reclaim level corresponding to an initial reclaim priority;

determining, as a first target memory control group, a memory control group whose corresponding reclaim level is equal to or higher than the first target reclaim level; and
scanning the first target memory control group, and reclaiming a scanned first reclaimable memory.

**12.** An electronic device (100), comprising:

a memory (121) and a processor (110), wherein the memory (121) is coupled to the processor (110), wherein the memory (121) stores program instructions, and when the program instructions are executed by the processor (110), the electronic device (100) is enabled to perform the memory reclaim method according to any one of claims 1 to 11.

**13.** A computer-readable storage medium, comprising a computer program, wherein when the computer program is run on an electronic device, the electronic device is enabled to perform the memory reclaim method according to any one of claims 1 to 11.

## Patentansprüche

**1.** Ein Verfahren zur Speicherbereinigung, angewendet auf ein elektronisches Gerät (100), wobei das Verfahren Folgendes umfasst:

das Ermitteln (S801), basierend auf historischen Daten der Speicherbereinigung, der Speicherbereinigungseffizienz einer Speichersteuerungsgruppe, die jeder Anwendung auf dem aktuellen elektronischen Gerät (100) entspricht, sofern eine Auslösebedingung für einen Speicherbereinigungsvorgang erfüllt ist;
das Festlegen (S802) eines Bereinigungsniveaus der Speichersteuerungsgruppe, die jeder Anwendung entspricht, basierend auf der ermittelten Speicherbereinigungseffizienz; und
das Ermitteln (S803) einer zu durchlaufenden Ziel-Speichersteuerungsgruppe basierend auf einer Bereinigungspriorität und dem Bereinigungsniveau jeder Speichersteuerungsgruppe, das Scannen der Ziel-Speichersteuerungsgruppe und das Bereinigen des gescannten bereinigbaren Speichers,
**dadurch gekennzeichnet, dass** das Ermitteln der Speicherbereinigungseffizienz einer Speichersteuerungsgruppe, die jeder Anwendung auf dem aktuellen elektronischen Gerät entspricht, basierend auf historischen Daten der Speicherbereinigung umfasst:

für jede Anwendung das Ermitteln einer gescannten Speichermenge und einer bereinigten Speichermenge der Speichersteuerungsgruppe, die der Anwendung in einer vorherigen Bereinigung entspricht; und
das Bestimmen der Speicherbereinigungseffizienz der Speichersteuerungsgruppe, die der Anwendung entspricht, basierend auf der gescannten Speichermenge und der bereinigten Speichermenge,
wobei das Bestimmen der Speicherbereinigungseffizienz der Speichersteuerungsgruppe, die der Anwendung entspricht, basierend auf der gescannten Speichermenge und der bereinigten Speichermenge Folgendes umfasst:

das Bestimmen der ersten Speicherbereinigungseffizienz einer Dateiseite der Speichersteuerungsgruppe, basierend auf einer ersten gescannten Speichermenge und einer ersten bereinigten Speichermenge der Dateiseite der Speichersteuerungsgruppe, die der Anwendung in der vorherigen Bereinigung entspricht;
das Bestimmen der zweiten Speicherbereinigungseffizienz einer anonymen Seite der Speichersteuerungsgruppe, basierend auf einer zweiten gescannten Speichermenge und einer zweiten bereinigten Speichermenge der anonymen Seite der Speichersteuerungsgruppe, die der Anwendung in der vorherigen Bereinigung entspricht; und
das Bestimmen der Speicherbereinigungseffizienz der Speichersteuerungsgruppe, die der Anwendung entspricht, basierend auf der ersten und der zweiten Speicherbereinigungseffizienz.

**2.** Verfahren gemäß Anspruch 1, wobei das Festlegen eines Bereinigungsniveaus der Speichersteuerungsgruppe, die jeder Anwendung entspricht, basierend auf der ermittelten Speicherbereinigungseffizienz Folgendes umfasst:

für jede Speichersteuerungsgruppe das Ermitteln eines ersten Bereichs der Bereinigungseffizienz, dem die Speicherbereinigungseffizienz der Speichersteuerungsgruppe zugeordnet ist;
Suchen einer konfigurierten Zuordnung zwischen einem Bereich der Rückgewinnungseffizienz und einer Rückgewinnungsstufe für eine erste Rückgewinnungsstufe, die dem ersten Rückgewinnungseffizienzbereich entspricht; und
Festlegen der Rückgewinnungsstufe der Speichersteuerungsgruppe auf die erste Rückgewinnungsstufe.

3. Verfahren nach Anspruch 1, wobei das Festlegen, basierend auf der ermittelten Speicher-Rückgewinnungseffizienz, einer Rückgewinnungsstufe der Speichersteuerungsgruppe, die jeder Anwendung entspricht, Folgendes umfasst:

Ermitteln einer Anwendungs-Whitelist (S602), wobei mindestens eine erste Anwendung in der Anwendungs-Whitelist verzeichnet ist; und
Festlegen (S603), basierend auf der ermittelten Speicher-Rückgewinnungseffizienz und der Anwendungs-Whitelist, der Rückgewinnungsstufe der Speichersteuerungsgruppe, die jeder Anwendung entspricht.

4. Verfahren nach Anspruch 3, wobei das Ermitteln einer Anwendungs-Whitelist umfasst:

Auslesen einer ersten Whitelist aus einer vorhandenen Konfigurationsdatei; und
Das Festlegen, basierend auf der ermittelten Speicher-Rückgewinnungseffizienz und der Anwendungs-Whitelist, der Rückgewinnungsstufe der Speichersteuerungsgruppe, die jeder Anwendung entspricht, umfasst:

Für jede Speichersteuerungsgruppe Bestimmen eines ersten Rückgewinnungseffizienzbereichs, dem die Rückgewinnungseffizienz der Speichersteuerungsgruppe zugeordnet ist;
Suchen einer konfigurierten Zuordnung zwischen einem Rückgewinnungseffizienzbereich und einer Rückgewinnungsstufe für eine erste Rückgewinnungsstufe, die dem ersten Rückgewinnungseffizienzbereich entspricht;
Festlegen der Rückgewinnungsstufe der Speichersteuerungsgruppe auf die erste Rückgewinnungsstufe; und
Anpassen der Rückgewinnungsstufe einer Speichersteuerungsgruppe entsprechend einer ersten Anwendung in der ersten Whitelist auf eine zweite Rückgewinnungsstufe.

5. Verfahren nach Anspruch 3, wobei das Ermitteln einer Anwendungs-Whitelist umfasst:

Erkennen einer Vordergrundanwendung; und
Erzeugen einer zweiten Whitelist basierend auf der erkannten Vordergrundanwendung, wobei eine Anwendung in der zweiten Whitelist die Vordergrundanwendung ist; und
Das Festlegen, basierend auf der ermittelten Speicher-Rückgewinnungseffizienz und der Anwendungs-Whitelist, der Rückgewinnungsstufe der Speichersteuerungsgruppe, die jeder Anwendung entspricht, umfasst:

Für jede Speichersteuerungsgruppe Bestimmen eines ersten Rückgewinnungseffizienzbereichs, dem die Rückgewinnungseffizienz der Speichersteuerungsgruppe zugeordnet ist;
Suchen einer konfigurierten Zuordnung zwischen einem Rückgewinnungseffizienzbereich und einer Rückgewinnungsstufe für eine erste Rückgewinnungsstufe, die dem ersten Rückgewinnungseffizienzbereich entspricht;
Festlegen der Rückgewinnungsstufe der Speicher-Kontrollgruppe auf die erste Rückgewinnungsstufe; und
Anpassen der Rückgewinnungsstufe einer Speicher-Kontrollgruppe, die der Vordergrundanwendung entspricht, auf eine zweite Rückgewinnungsstufe.

6. Verfahren gemäß Anspruch 3, wobei das Erhalten einer Anwendungs-Whitelist Folgendes umfasst:

Lesen einer ersten Whitelist aus einer bestehenden Konfigurationsdatei;
Erkennen einer Vordergrundanwendung; und
Hinzufügen der Vordergrundanwendung zur ersten Whitelist, um eine dritte Whitelist zu erhalten; und
Die Einstellung des Rückgewinnungsgrades der Speicher-Kontrollgruppe, die jeweils einer Anwendung entspricht, basierend auf der erhaltenen Speicherrückgewinnungseffizienz und der Anwendungs-Whitelist umfasst:

Für jede Speicher-Kontrollgruppe Bestimmung eines ersten Bereichs der Rückgewinnungseffizienz, zu dem die Speicherrückgewinnungseffizienz der Speicher-Kontrollgruppe gehört;
Suche einer konfigurierten Zuordnung zwischen einem Rückgewinnungseffizienzbereich und einem Rückgewinnungsgrad für einen ersten Rückgewinnungsgrad, der dem ersten Rückgewinnungseffizienzbereich entspricht;
Festlegen der Rückgewinnungsstufe der Speicher-Kontrollgruppe auf die erste Rückgewinnungsstufe; und

EP 4 474 998 B1

Anpassen der Rückgewinnungsstufe einer Speicher-Kontrollgruppe, die jeweils einer Anwendung in der dritten Whitelist entspricht, auf eine zweite Rückgewinnungsstufe.

7. Verfahren gemäß einem der Ansprüche 3 bis 6, wobei die zweite Rückgewinnungsstufe die niedrigste Rückgewinnungsstufe ist.

8. Verfahren gemäß einem der Ansprüche 2 sowie 4 bis 6, wobei in der Zuordnung zwischen Rückgewinnungseffizienzbereich und Rückgewinnungsstufe ein höherer Rückgewinnungswert eines Rückgewinnungseffizienzbereichs eine höhere Rückgewinnungsstufe für den Rückgewinnungseffizienzbereich anzeigt.

9. Verfahren gemäß Anspruch 1, wobei die Speicherrückgewinnungseffizienz der Speicher-Kontrollgruppe, die der Anwendung entspricht, gleich der Summe aus der zweiten Speicherrückgewinnungseffizienz und dem Produkt aus der ersten Speicherrückgewinnungseffizienz und einem ersten Koeffizienten ist.

10. Verfahren gemäß Anspruch 9, wobei der erste Koeffizient auf einem Verhältnis der Rückgewinnungsrate der Dateiseite zu der Rückgewinnungsrate der anonymen Seite basiert.

11. Verfahren gemäß Anspruch 1, wobei die Feststellung einer Ziel-Speicher-Kontrollgruppe, die basierend auf Rückgewinnungspriorität und Rückgewinnungsstufe jeder Speicher-Kontrollgruppe durchlaufen werden muss, das Scannen der Ziel-Speicher-Kontrollgruppe und das Rückgewinnen von gescanntem rückgewinnbarem Speicher umfasst:

Bestimmen eines ersten Ziel-Wiederherstellungsniveaus auf der Grundlage einer Übereinstimmung zwischen einer Wiederherstellungspriorität und einem Wiederherstellungsniveau, wobei das erste Ziel-Wiederherstellungsniveau der anfänglichen Wiederherstellungspriorität entspricht;
Bestimmen einer Speichersteuerungsgruppe als erste Ziel-Speichersteuerungsgruppe, deren entsprechendes Wiederherstellungsniveau gleich oder höher als das erste Ziel-Wiederherstellungsniveau ist; und
Scannen der ersten Ziel-Speichersteuerungsgruppe und Wiederherstellen eines gescannten ersten wiederherstellbaren Speichers.

12. Eine elektronische Vorrichtung (100), umfassend:

einen Speicher (121) und einen Prozessor (110), wobei der Speicher (121) mit dem Prozessor (110) gekoppelt ist, wobei
der Speicher (121) Programm-Anweisungen speichert, und wenn die Programm-Anweisungen vom Prozessor (110) ausgeführt werden, wird die elektronische Vorrichtung (100) befähigt, das Speicher-Wiederherstellungsverfahren gemäß einem der Ansprüche 1 bis 11 auszuführen.

13. Ein computerlesbares Speichermedium, das ein Computerprogramm umfasst, wobei, wenn das Computerprogramm auf einer elektronischen Vorrichtung ausgeführt wird, die elektronische Vorrichtung befähigt wird, das Speicher-Wiederherstellungsverfahren gemäß einem der Ansprüche 1 bis 11 auszuführen.


**Revendications**

1. Méthode de récupération de mémoire, appliquée à un dispositif électronique (100), la méthode comprenant :

l'obtention (S801), sur la base des données historiques de récupération de mémoire, de l'efficacité de récupération de mémoire d'un groupe de contrôle de mémoire correspondant à chaque application sur le dispositif électronique actuel (100), si une condition de déclenchement pour une procédure de récupération de mémoire est satisfaite ;
la définition (S802), sur la base de l'efficacité de récupération de mémoire obtenue, d'un niveau de récupération du groupe de contrôle de mémoire correspondant à chaque application ; et
la détermination (S803), sur la base d'une priorité de récupération et du niveau de récupération de chaque groupe de contrôle de mémoire, d'un groupe de contrôle de mémoire cible devant être parcouru, le balayage du groupe de contrôle de mémoire cible, et la récupération de la mémoire récupérable ainsi balayée,
**caractérisé en ce que** l'obtention, sur la base des données historiques de récupération de mémoire, de l'efficacité de récupération de mémoire d'un groupe de contrôle de mémoire correspondant à chaque application sur le dispositif électronique actuel comprend :

pour chaque application, l'obtention d'une quantité de mémoire balayée et d'une quantité de mémoire récupérée du groupe de contrôle de mémoire correspondant à l'application lors d'une récupération précédente ; et

la détermination, sur la base de la quantité de mémoire balayée et de la quantité de mémoire récupérée, de l'efficacité de récupération de mémoire du groupe de contrôle de mémoire correspondant à l'application, où la détermination, sur la base de la quantité de mémoire balayée et de la quantité de mémoire récupérée, de l'efficacité de récupération de mémoire du groupe de contrôle de mémoire correspondant à l'application comprend :

la détermination de la première efficacité de récupération de mémoire d'une page de fichier du groupe de contrôle de mémoire sur la base d'une première quantité de mémoire balayée et d'une première quantité de mémoire récupérée de la page de fichier du groupe de contrôle de mémoire correspondant à l'application lors de la récupération précédente ;

la détermination de la deuxième efficacité de récupération de mémoire d'une page anonyme du groupe de contrôle de mémoire sur la base d'une deuxième quantité de mémoire balayée et d'une deuxième quantité de mémoire récupérée de la page anonyme du groupe de contrôle de mémoire correspondant à l'application lors de la récupération précédente ; et

la détermination, sur la base de la première efficacité de récupération de mémoire et de la deuxième efficacité de récupération de mémoire, de l'efficacité de récupération de mémoire du groupe de contrôle de mémoire correspondant à l'application.

2. Méthode selon la revendication 1, où la définition, sur la base de l'efficacité de récupération de mémoire obtenue, d'un niveau de récupération du groupe de contrôle de mémoire correspondant à chaque application comprend :

pour chaque groupe de contrôle de mémoire, la détermination d'une première plage d'efficacité de récupération à laquelle appartient l'efficacité de récupération de mémoire du groupe de contrôle de mémoire ;

rechercher une correspondance configurée entre une plage d'efficacité de récupération et un niveau de récupération pour un premier niveau de récupération correspondant à la première plage d'efficacité de récupération ; et

définir le niveau de récupération du groupe de contrôle de mémoire au premier niveau de récupération.

3. Le procédé selon la revendication 1, la définition, sur la base de l'efficacité obtenue de récupération de mémoire, d'un niveau de récupération du groupe de contrôle de mémoire correspondant à chaque application, comprend :

obtenir une liste blanche d'applications (S602), dans laquelle au moins une première application est enregistrée dans la liste blanche d'applications ; et

définir (S603), sur la base de l'efficacité de récupération de mémoire obtenue et de la liste blanche d'applications, le niveau de récupération du groupe de contrôle de mémoire correspondant à chaque application.

4. Le procédé selon la revendication 3, dans lequel l'obtention d'une liste blanche d'applications comprend :

lecture d'une première liste blanche à partir d'un fichier de configuration existant ; et

la définition, sur la base de l'efficacité obtenue de récupération de mémoire et de la liste blanche d'applications, du niveau de récupération du groupe de contrôle de mémoire correspondant à chaque application comprend :

pour chaque groupe de contrôle de mémoire, déterminer une première plage d'efficacité de récupération à laquelle appartient l'efficacité de récupération de mémoire du groupe de contrôle de mémoire ;

rechercher une correspondance configurée entre une plage d'efficacité de récupération et un niveau de récupération pour un premier niveau de récupération correspondant à la première plage d'efficacité de récupération ;

définir le niveau de récupération du groupe de contrôle de mémoire au premier niveau de récupération ; et

ajuster, à un second niveau de récupération, un niveau de récupération d'un groupe de contrôle de mémoire correspondant à une première application dans la première liste blanche.

5. Le procédé selon la revendication 3, dans lequel l'obtention d'une liste blanche d'applications comprend :

reconnaître une application au premier plan ; et

générer une seconde liste blanche en fonction de l'application au premier plan reconnue, dans laquelle une application de la seconde liste blanche est l'application au premier plan ; et

la définition, sur la base de l'efficacité obtenue de récupération de mémoire et de la liste blanche d'applications, du niveau de récupération du groupe de contrôle de mémoire correspondant à chaque application comprend :

> pour chaque groupe de contrôle de mémoire, déterminer une première plage d'efficacité de récupération à laquelle appartient l'efficacité de récupération de mémoire du groupe de contrôle de mémoire ;
>
> rechercher une correspondance configurée entre une plage d'efficacité de récupération et un niveau de récupération pour un premier niveau de récupération correspondant à la première plage d'efficacité de récupération ;
>
> définir le niveau de récupération du groupe de contrôle de la mémoire au premier niveau de récupération ; et
>
> ajuster, à un deuxième niveau de récupération, le niveau de récupération d'un groupe de contrôle de la mémoire correspondant à l'application au premier plan.

6. Le procédé selon la revendication 3, dans lequel l'obtention d'une liste blanche d'applications comprend :

> lire une première liste blanche à partir d'un fichier de configuration existant ;
>
> reconnaître une application au premier plan ; et
>
> ajouter l'application au premier plan à la première liste blanche afin d'obtenir une troisième liste blanche ; et
>
> la définition, sur la base de l'efficacité de récupération de la mémoire obtenue et de la liste blanche d'applications, du niveau de récupération du groupe de contrôle de la mémoire correspondant à chaque application comprend :
>
> > pour chaque groupe de contrôle de la mémoire, déterminer une première plage d'efficacité de récupération à laquelle appartient l'efficacité de récupération de la mémoire du groupe de contrôle de la mémoire ;
> >
> > rechercher une correspondance configurée entre une plage d'efficacité de récupération et un niveau de récupération pour un premier niveau de récupération correspondant à la première plage d'efficacité de récupération ;
> >
> > définir le niveau de récupération du groupe de contrôle de la mémoire au premier niveau de récupération ; et
> >
> > ajuster, à un deuxième niveau de récupération, le niveau de récupération d'un groupe de contrôle de la mémoire correspondant à chaque application dans la troisième liste blanche.

7. Le procédé selon l'une quelconque des revendications 3 à 6, dans lequel le deuxième niveau de récupération est le niveau de récupération le plus bas.

8. Le procédé selon l'une quelconque des revendications 2 et 4 à 6, dans lequel, dans la correspondance entre la plage d'efficacité de récupération et le niveau de récupération, une valeur plus élevée de l'efficacité de récupération correspondant à une plage d'efficacité de récupération indique un niveau de récupération plus élevé correspondant à ladite plage.

9. Le procédé selon la revendication 1, dans lequel l'efficacité de récupération de la mémoire du groupe de contrôle de la mémoire correspondant à l'application est égale à la somme de la deuxième efficacité de récupération de la mémoire et du produit de la première efficacité de récupération de la mémoire et d'un premier coefficient.

10. Le procédé selon la revendication 9, dans lequel le premier coefficient est déterminé sur la base du rapport entre le taux de récupération de la page de fichier et le taux de récupération de la page anonyme.

11. Le procédé selon la revendication 1, dans lequel la détermination, sur la base d'une priorité de récupération et du niveau de récupération de chaque groupe de contrôle de la mémoire, d'un groupe de contrôle de la mémoire cible devant être parcouru, le balayage du groupe cible, et la récupération de la mémoire récupérable scannée comprend :

> déterminer, sur la base d'une correspondance entre une priorité de récupération et un niveau de récupération, un premier niveau de récupération cible correspondant à une priorité de récupération initiale ;
>
> déterminer, comme premier groupe de contrôle de la mémoire cible, un groupe de contrôle de la mémoire dont le niveau de récupération correspondant est égal ou supérieur au premier niveau de récupération cible ; et
>
> scanner le premier groupe de contrôle de la mémoire cible, et récupérer une première mémoire récupérable scannée.

**12.** Un dispositif électronique (100), comprenant :

une mémoire (121) et un processeur (110), la mémoire (121) étant couplée au processeur (110), où la mémoire (121) stocke des instructions de programme et, lorsque les instructions de programme sont exécutées par le processeur (110), le dispositif électronique (100) est apte à exécuter le procédé de récupération de mémoire selon l'une quelconque des revendications 1 à 11.

**13.** Un support de stockage lisible par ordinateur, comprenant un programme informatique, le dispositif électronique étant apte à exécuter le procédé de récupération de mémoire selon l'une quelconque des revendications 1 à 11 lorsqu'il exécute ledit programme informatique.

Electronic device 100

Antenna 1                                    Antenna 2

| Mobile communication module<br>2G/3G/4G/5G<br>[150] | Wireless communication module<br>BT/WLAN/GNSS/NFC/IR/FM<br>[160] |

| Displays<br>1 – N [194] | | External<br>memory<br>interface [120] |

| Camera lenses<br>1 – N [193] | | |

| Indicator [192] | | Speaker<br>[170A] |

| Motor [191] | Processor<br>[110] | Audio<br>module<br>[170] | Receiver<br>[170B] |

| Button [190] | | | Microphone<br>[170C] |

| Internal memory<br>[121] | | Headset<br>jack [170D] |

| SIM card<br>interfaces 1 – N<br>[195] | | Sensor module<br>[180] |

| USB card<br>interfaces [130] | Charging<br>management<br>module<br>[140] | Power<br>management<br>module<br>[141] |

Charging
input

| | | Battery<br>[142] |

FIG. 1

| Application layer | Camera | Calendar | Map | WLAN | Music | Massaging |
| | Gallery | Phone | Navigation | Bluetooth | Video | ... |

| Application framework layer | Monitoring module | Whitelist management module | Whitelist configuration module |
| | | | ... |

| System library | Surface manager | | Android runtime |

| Kernel layer | Display driver | Memory reclaim module | Audio driver |
| | Sensor driver | Bluetooth driver | ... |

FIG. 2

If a trigger condition for a memory reclaim procedure is satisfied, calculate, based on a scanned memory amount and a reclaimed memory amount of the memory control groups of the application 1 to the application 8 in a previous reclaim, memory reclaim efficiency of the memory control group memcg1 to the memory control group memcg8 that correspond to the application 1 to the application 8 — S301

Set reclaim levels of memcg1 to memcg8 based on the memory reclaim efficiency of memcg1 to memcg8 — S302

Read an initial reclaim priority 12, and set, based on the correspondence between the reclaim priority and the reclaim level, a reclaim level corresponding to the initial reclaim priority 12 to level4 — S303

Determine that memcg1 and memcg2 whose reclaim levels are level4 as the memory control groups to be scanned in this round — S304

Scan memcg1 and memcg2, and if a memory of a1 megabyte may be reclaimed, reclaim the memory of a1 megabyte to a partner system — S305

TO
FIG. 3B

Determine that a reclaimed memory amount in this round is larger than or equal to a preset reclaim amount — S317

Based on the correspondence between the reclaim priority and the reclaim level, determine that a reclaim level corresponding to the third target reclaim priority 9 is level3, determine that memcg1, memcg2, and memcg3 whose reclaim levels are equal to or higher than level3 as the memory control groups to be scanned in this round, scan memcg1, memcg2, and memcg3, and reclaim a reclaimable memory of a4 megabyte to the partner system — S316

Subtract the second target reclaim priority 10 by 1, to obtain a third target reclaim priority 9 — S315

No

Does a reclaimed memory amount in this round reach a preset reclaim amount? — S314

Yes

TO
FIG. 3B

TO
FIG. 3B

FIG. 3A

EP 4 474 998 B1

CONT.
FROM
FIG. 3A

CONT.
FROM
FIG. 3A

CONT.
FROM
FIG. 3A

```
                                                    S306
Yes ┌─────< Does a reclaimed
     │        memory amount in this round reach a preset
     │              reclaim amount? >
     │                   │ No
     │                   ▼                            S307
     │       ┌──────────────────────────────────┐
     │       │ Subtract the initial reclaim      │
     │       │ priority 12 by 1, to obtain a     │
     │       │ first target reclaim priority 11  │
     │       └──────────────────────────────────┘
     │                   │
     │                   ▼                            S308
     │       ┌──────────────────────────────────┐
     │       │ Determine, based on the           │
     │       │ correspondence between the        │
     │       │ reclaim priority and the reclaim  │
     │       │ level, that a reclaim level       │
     │       │ corresponding to the first target │
     │       │ reclaim priority 11 is level4     │
     │       └──────────────────────────────────┘
     │                   │
     │                   ▼                            S309
     │       ┌──────────────────────────────────┐
     │       │ Determine that memcg1 and memcg2  │
     │       │ whose reclaim levels are level4   │
     │       │ as the memory control groups to   │
     │       │ be scanned in this round          │
     │       └──────────────────────────────────┘
     │                   │
     │                   ▼                            S310
     │       ┌──────────────────────────────────┐
     │       │ Scan memcg1 and memcg2, and if a  │
     │       │ memory of a2 megabyte may be      │
     │       │ reclaimed, reclaim the memory of  │
     │       │ a2 megabyte to a partner system   │
     │       └──────────────────────────────────┘
     │                   │
     ▼                   ▼
  ┌─────── End ───────┐
```

Based on the correspondence between the reclaim priority and the reclaim level, determine that a reclaim level corresponding to the second target reclaim priority 10 is level4, determine that memcg1 and memcg2 whose reclaim levels are level4 as the memory control group to be scanned in this round, scan memcg1 and memcg2, and reclaim a reclaimable memory of a3 megabyte to the partner system — S313

Subtract the first target reclaim priority 11 by 1, to obtain a second target reclaim priority 10 — S312

No ◄── Does a reclaimed memory amount in this round reach a preset reclaim amount? — S311

Yes

End

FIG. 3B

EP 4 474 998 B1

FIG. 4

FIG. 5

| S601 | If a trigger condition for a memory reclaim procedure is satisfied, calculate, based on a scanned memory amount and a reclaimed memory amount of the memory control groups of the application 1 to the application 8 in a previous reclaim, memory reclaim efficiency of the memory control group memcg1 to the memory control group memcg8 that correspond to the application 1 to the application 8 |

| S602 | Obtain an application whitelist |

| S603 | Set reclaim levels of memcg1 to memcg8 based on the memory reclaim efficiency and the application whitelists of memcg1 to memcg8 |

| S604 | Read an initial reclaim priority 12, and set, based on the correspondence between the reclaim priority and the reclaim level, a reclaim level corresponding to the initial reclaim priority 12 to level4 |

| S605 | Determine that a memcg2 whose reclaim level is level4 as the memory control group to be scanned in this round |

| S606 | Scan the memcg2, and if a memory of c1 megabyte may be reclaimed, reclaim the memory of c1 megabyte to a partner system |

TO
FIG. 6B

S618 — Determine that a reclaimed memory amount in this round is larger than or equal to a preset reclaim amount

S617 — Based on the correspondence between the reclaim priority and the reclaim level, determine that a reclaim level corresponding to the third target reclaim priority 9 is level3, determine that memcg2 and memcg3 whose reclaim levels are equal to or higher than level3 as the memory control groups to be scanned in this round, scan memcg2 and memcg3, and reclaim a reclaimable memory of a4 megabyte to the partner system

S616 — Subtract the second target reclaim priority 10 by 1, to obtain a third target reclaim priority 9

No

S615 — Does a reclaimed memory amount in this round reach a preset reclaim amount?

Yes

TO
FIG. 6B

TO
FIG. 6B

FIG. 6A

S607

Yes ← Does a reclaimed memory amount in this round reach a preset reclaim amount?

↓ No

S608

Subtract the initial reclaim priority 12 by 1, to obtain a first target reclaim priority 11

S609

Determine, based on the correspondence between the reclaim priority and the reclaim level, that a reclaim level corresponding to the first target reclaim priority 11 is level4

S610

Determine that a memcg2 whose reclaim level is level4 as the memory control group to be scanned in this round

S611

Scan the memcg2, and if a memory of c2 megabyte may be reclaimed, reclaim the memory of c2 megabyte to a partner system

S614

Based on the correspondence between the reclaim priority and the reclaim level, determine that a reclaim level corresponding to the second target reclaim priority 10 is level4, determine that memcg2 whose reclaim level is level4 as the memory control group to be scanned in this round, scan memcg2, and reclaim a reclaimable memory of c3 megabyte to the partner system

S613

Subtract the first target reclaim priority 11 by 1, to obtain a second target reclaim priority 10

↑ No

S612

Does a reclaimed memory amount in this round reach a preset reclaim amount?

↓ Yes

End

FIG. 6B

EP 4 474 998 B1

FIG. 7

If a trigger condition for a memory reclaim procedure is satisfied, obtain, based on historical data of memory reclaim, memory reclaim efficiency of a memory control group corresponding to each application in an electronic device — S801

Set, based on the memory reclaim efficiency, a reclaim level of the memory control group corresponding to each application — S802

Determine, based on a reclaim priority and the reclaim level of the memory control group, a target memory control group to be traversed, scan the target memory control group, and reclaim a scanned reclaimable memory — S803

FIG. 8

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2022089452 A1
- CN 113778662 A
- US 2022121495 A1